# FASCICULE DE BREVET EUROPEEN

(11) **EP 4 090 991 B1**
(45) Date de publication et mention de la délivrance du brevet: **09.07.2025**
(21) Numéro de dépôt: 21700317.7
(22) Date de dépôt: 15.01.2021
(51) Int. Cl.: G01S 7/62, G01S 15/89, G01S 15/10

(54) **ECHOSONDEUR PARAMÉTRIQUE DÉPOINTABLE, ET PROCÉDÉ DE CARACTÉRISATION D'UNE PARTIE DU SOUS-SOL D'UN MILIEU SUBAQUATIQUE**
DEREFERENZIERTES PARAMETRISCHES ECHOLOT UND VERFAHREN ZUR CHARAKTERISIERUNG EINES SUB-BOTTOMTEILS EINER UNTERWASSERUMGEBUNG
DEPOINTABLE PARAMETRIC ECHOSOUNDER, AND METHOD FOR CHARACTERIZING A PORTION OF THE SUB-BOTTOM OF A SUBAQUATIC ENVIRONMENT

(30) Priorité: 17.01.2020 FR 2000464
(43) Date de publication de la demande: 23.11.2022
(73) Titulaire: EXAIL, 78100 Saint-Germain-en-Laye (FR)
(72) Inventeur: MOSCA, Frédéric, 78100 Saint-Germain-en-Laye (FR); MATTE, Guillaume, 78100 Saint-Germain-en-Laye (FR)
(74) Mandataire: Jacobacci Coralis Harle
(86) Numéro de dépôt international: PCT/EP2021/050850
(87) Numéro de publication internationale: WO 2021/144444

(56) Documents cités:
- EP-A1- 0 070 494
- US-A- 3 824 531
- US-A1- 2017 350 978
- US-A1- 2017 363 724

## Description

### Domaine technique auquel se rapporte l'invention

La présente invention concerne de manière générale le domaine des échosondeurs, c'est-à-dire des appareils de mesure de profondeur de type sonars, utilisant la réflexion des ondes acoustiques.

Elle concerne en particulier un échosondeur pour l'exploration du contenu du sous-sol d'un milieu subaquatique.

Elle concerne plus particulièrement un échosondeur paramétrique configuré pour :
- émettre, dans le milieu subaquatique :
- une première onde acoustique variant à une première fréquence et une deuxième onde acoustique variant à une deuxième fréquence, ou
- une onde acoustique modulée comprenant une première composante et une deuxième composante variant respectivement à ladite première fréquence et à ladite deuxième fréquence, et pour
- en réponse à ladite émission, capter un signal d'écho de fréquence égale à la différence entre ladite première fréquence et ladite deuxième fréquence.

Elle concerne également un procédé associé de caractérisation d'une partie du sous-sol d'un milieu subaquatique.

### Arrière-plan technologique

L'exploration du contenu du sous-sol d'un milieu subaquatique est un enjeu important, notamment dans le domaine maritime.

En effet, il est courant de disposer des installations, telles que des pipelines et des câbles pour la télécommunication ou le transport d'électricité, directement sur le fond marin. Mais ces installations peuvent ensuite se trouver enfouies dans une couche de sédiments ou de sable, devenant alors difficiles à localiser et à caractériser.

Un échosondeur particulier permettant de sonder le contenu d'une telle couche de sédiments est décrit dans l'article « Feasibility of B-Scan Imaging in Sediment by Means of Parametric Transmission Technique » de J. Marchal et P. Cervenka (Acta Acustica united with Acustica, volume 90 (2004) pages 62 à 69).

L'échosondeur décrit dans cet article comprend un émetteur de grand diamètre, de type piston, piloté pour émettre une première onde acoustique variant à une première fréquence, ainsi qu'une deuxième onde acoustique variant à une deuxième fréquence. Chacune de ces deux ondes est émise à la verticale, sous l'émetteur. Elles se superposent ainsi l'une à l'autre tout le long de la colonne d'eau située à l'aplomb de l'émetteur.

Comme la réponse de l'eau à une variation de densité est légèrement non-linéaire, la superposition des première et deuxième ondes acoustiques engendre, directement dans l'eau, une onde acoustique supplémentaire, de fréquence égale à la différence entre la première fréquence et la deuxième fréquence. Cet effet de mélange non-linéaire est généralement appelé « effet paramétrique ». Il correspond en quelque sorte à une auto-démodulation non-linéaire, directement dans l'eau, de l'onde modulée constituée par la superposition des première et deuxième ondes acoustiques.

Cette onde acoustique supplémentaire, qui est donc générée tout au long de la colonne d'eau située sous l'émetteur, se propage à la verticale et atteint un point du fond situé à l'aplomb sous l'émetteur. Elle permet alors de sonder le sous-sol du milieu subaquatique, sous le point en question.

Le coefficient d'absorption de l'onde acoustique supplémentaire dans la couche de sédiments à sonder est plus faible que les coefficients d'absorption des première et deuxième ondes acoustiques, car la fréquence de l'onde acoustique supplémentaire « à basse fréquence » est plus faible que celles des première et deuxième ondes acoustiques. D'autre part, générer cette onde acoustique supplémentaire directement dans l'eau, par mélange non-linéaire, permet de bénéficier d'une directivité plus élevée que si l'onde acoustique supplémentaire était émise directement par l'émetteur.

L'échosondeur qui vient d'être décrit peut être placé successivement à différentes positions, à la surface de l'eau, afin de sonder la couche de sédiments en différents points du fond. Cela permet de générer ensuite une image bidimensionnelle ou tridimensionnelle représentative du contenu de cette couche.

Un tel sondage s'avère toutefois long et peu commode.

### Objet de l'invention

Dans ce contexte, la présente invention propose un nouveau type d'échosondeur paramétrique permettant de générer une onde sonore directement dans l'eau, par effet paramétrique, l'axe de propagation de cette onde pouvant être modifié, sans déplacement ni de pivotement de l'échosondeur, par un pilotage électronique des transducteurs de l'échosondeur.

Plus particulièrement, on propose selon l'invention un échosondeur paramétrique comprenant :
- une antenne émettrice comportant plusieurs transducteurs,
- au moins un récepteur, et
- un système de pilotage et d'acquisition configuré pour exécuter les étapes suivantes :
   a) piloter lesdits transducteurs pour qu'ils émettent dans un milieu subaquatique une première onde acoustique ayant une première fréquence et une deuxième onde acoustique ayant une deuxième fréquence, la première onde et la deuxième onde se superposant l'une à l'autre le long d'un axe de superposition dirigé vers un point du fond du milieu subaquatique, chaque transducteur étant piloté par un signal d'émission, les différents signaux d'émission des différents transducteurs présentant des retards prédéterminés les uns par rapport aux autres, et
   b) acquérir un signal d'écho, de fréquence égale à la différence entre ladite première fréquence et ladite deuxième fréquence, capté par ledit récepteur en réponse à l'émission réalisée à l'étape a),
      le système de pilotage et d'acquisition étant configuré en outre pour :
      - exécuter l'ensemble des étapes a) et b) plusieurs fois, en faisant varier une partie au moins desdits retards d'une exécution de l'étape a) à l'autre, de manière à modifier l'orientation dudit axe de superposition d'une exécution de l'étape a) à l'autre, et pour
   c) déterminer, à partir des signaux d'écho acquis lors des différentes exécutions de l'étape b), une image bidimensionnelle ou tridimensionnelle représentative du contenu du sous-sol du milieu subaquatique sous chacun desdits points du fond.

Suite à chaque exécution de l'étape a), une onde acoustique supplémentaire, de fréquence égale à la différence entre la première fréquence et la deuxième fréquence, est générée directement dans l'eau par mélange non linéaire de la première onde acoustique avec la deuxième onde acoustique, le long dudit axe de superposition. Cette onde acoustique supplémentaire « à basse fréquence » se propage alors parallèlement audit axe de superposition. Le point du fond qu'elle atteint, situé dans le prolongement de cet axe, peut donc être sélectionné par un choix approprié des retards entre signaux d'émission.

L'échosondeur paramétrique selon l'invention permet donc, grâce à un pilotage électronique approprié des transducteurs de l'antenne, de sonder le contenu du sous-sol du milieu subaquatique sous différents points du fond, avec une onde acoustique « à basse fréquence » pénétrant bien dans ce sous-sol, et sans avoir pour cela à déplacer l'échosondeur.

Toutefois, émettre une puissance acoustique élevée s'avère nettement plus difficile avec l'échosondeur paramétrique selon l'invention qu'avec un échosondeur qui comprendrait un unique transducteur de grande dimension (tel que dans l'article précité de J. Marchal et P. Cervenka), monté mobile en pivotement de manière à pouvoir être pointé vers différents points du fond.

En effet, pour une antenne émettrice constituée d'un unique émetteur occupant toute la surface de l'antenne, chaque point de la surface de l'antenne contribue à l'émission des ondes acoustiques produites.

En revanche, pour une antenne émettrice constituée comme ici de plusieurs transducteurs distincts répartis en différents points à la surface de l'antenne, une partie seulement de la surface de l'antenne, constituée par l'ensemble des surfaces émettrices respectives de ces transducteurs, contribue à l'émission des ondes acoustiques produites.

Or l'efficacité du processus paramétrique de mélange non-linéaire dans l'eau est généralement faible, de l'ordre de quelques pourcents au plus, et décroit fortement lorsque la puissance des ondes acoustiques à mélanger diminue. Il est donc crucial pour un échosondeur paramétrique d'émettre des puissances acoustiques P_{A} très élevées, par exemple de l'ordre de 230 décibels à 1 mètre de distance du ou des transducteurs (la valeur de puissance P_{A} en décibels étant égale à 10 log (P_{A}/P_{Aref}), où la puissance acoustique de référence P_{Aref} est celle d'une onde de pression de 1 micropascal d'amplitude).

La réalisation d'un échosondeur paramétrique à antenne émettrice est donc particulièrement difficile techniquement. Les transducteurs employés doivent en effet être capables d'émettre des densités de puissance par unité de surface très élevées (typiquement supérieures à une dizaine de watt par centimètre carré). Et surtout, ces transducteurs doivent alors être pilotés par des signaux d'émission ayant une puissance électrique élevée, ce qui nécessite un ou des amplificateurs de puissance généralement encombrants et ce qui complexifie l'électronique de pilotage de ces transducteurs.

Mais malgré ces difficultés techniques, un échosondeur paramétrique comportant une telle antenne émettrice à plusieurs transducteurs est particulièrement intéressant. En effet, piloter de manière purement électronique la direction de propagation de l'onde acoustique, générée par effet paramétrique, permet de modifier cette direction très rapidement.

Cela permet notamment de relever une image bidimensionnelle ou tridimensionnelle représentative du contenu d'une couche de sédiments plus rapidement qu'en faisant pivoter mécaniquement un unique émetteur de grande dimension.

Cela permet aussi de compenser « en temps réel » (avec un temps de latence très bref typiquement inférieur à 0,1 seconde), à l'émission, les mouvements parasites de roulis ou de tangage de l'échosondeur, de sorte que les ondes acoustiques émises pointent dans des directions bien déterminées, indépendamment de ces mouvements parasites.

En outre, une antenne émettrice à plusieurs transducteurs apporte une grande souplesse dans le choix des séquences d'émissions, permettant ainsi de nombreuses configurations de sondage différentes, mêlant éventuellement un sondage paramétrique et un sondage sans mélange de fréquences du fond du milieu subaquatique.

L'échosondeur conforme à l'invention comprend une antenne réceptrice qui comporte le récepteur mentionné plus haut, ainsi que d'autres récepteurs du même type. Une telle antenne réceptrice à plusieurs récepteurs permet une réception sélective d'un point de vue angulaire : elle permet au système de pilotage et d'acquisition de sélectionner une direction de réception donnée. Le signal d'écho acquis à l'étape b) est alors représentatif d'une onde acoustique à basse fréquence ayant une direction de propagation bien déterminée, qui est la direction de réception en question, sélectionnée par le système de pilotage et d'acquisition (au lieu que ce signal d'écho soit représentatif de toute onde acoustique reçue, indépendamment de sa direction de propagation).

D'autres caractéristiques avantageuses de l'échosondeur conforme à l'invention sont les suivantes :
- le système de pilotage et d'acquisition est configuré pour, à l'étape a) :
- piloter chaque transducteur d'un premier groupe desdits transducteurs par un premier signal d'émission variant au cours du temps à ladite première fréquence, les transducteurs de ce premier groupe émettant ladite première onde acoustique, les différents premiers signaux d'émission présentant des premiers retards, prédéterminés, les uns par rapport aux autres,
- piloter chaque transducteur d'un deuxième groupe desdits transducteurs par un deuxième signal d'émission variant au cours du temps à ladite deuxième fréquence, les transducteurs de ce deuxième groupe émettant ladite deuxième onde acoustique, les différents deuxièmes signaux d'émission présentant des deuxièmes retards, prédéterminés, les uns par rapport aux autres,
   et pour faire varier lesdits premiers retards et/ou lesdits deuxièmes retards d'une exécution de l'étape a) à l'autre, de manière à modifier l'orientation dudit axe de superposition d'une exécution de l'étape a) à l'autre ;
- le système de pilotage et d'acquisition est configuré de sorte que :
   - lesdits signaux d'émission comprennent chacun une première composante et une deuxième composante variant respectivement au cours du temps avec ladite première fréquence et avec ladite deuxième fréquence, et de sorte que
   - les transducteurs de l'antenne émettent, à l'étape a), une onde acoustique modulée se propageant le long dudit axe de superposition, composée de ladite première onde acoustique et de ladite deuxième onde acoustique ;
   - l'antenne émettrice a une forme de croix à deux branches, certains desdits transducteurs étant disposés en ligne les uns à la suite des autres le long de la première branche de l'antenne, les autres transducteurs de l'antenne étant disposés en ligne les uns à la suite des autres le long de la deuxième branche de l'antenne ;
   - les transducteurs du premier groupe forment la première branche de l'antenne et les transducteurs du deuxième groupe forment la deuxième branche de l'antenne, lesdits premiers retards sont tels que la première onde acoustique se propage parallèlement à un premier plan d'émission, sous la forme d'un premier faisceau ayant une section transverse étroite selon une direction perpendiculaire au premier plan d'émission et allongée parallèlement au premier plan d'émission, lesdits deuxièmes retards sont tels que la deuxième onde acoustique se propage parallèlement à un deuxième plan d'émission, sous la forme d'un deuxième faisceau ayant une section transverse étroite selon une direction perpendiculaire au deuxième plan d'émission et allongée parallèlement au deuxième plan d'émission, ledit axe de superposition étant situé à l'intersection entre le premier plan d'émission et le deuxième plan d'émission, et le système de pilotage est configuré pour, d'une exécution de l'étape a) à l'autre :
      - faire varier lesdits premiers retards de manière à faire pivoter le premier plan d'émission autour d'un premier axe de balayage perpendiculaire à la première branche de l'antenne, et/ou
      - faire varier lesdits deuxièmes retards de manière à faire pivoter le deuxième plan d'émission autour d'un deuxième axe de balayage perpendiculaire à la deuxième branche de l'antenne ;
      - lesdits transducteurs sont disposés de manière à former une matrice à plusieurs lignes et plusieurs colonnes, les transducteurs étant situés respectivement aux différentes intersections entre les lignes et colonnes de la matrice ;
      - les premiers et deuxièmes retards sont tels que les première et deuxième ondes acoustiques sont émises respectivement sous la forme d'un premier faisceau collimaté et d'un deuxième faisceau collimaté centrés chacun sur ledit axe de superposition ;
      - les transducteurs du premier groupe occupent plusieurs zones distinctes de ladite matrice, un ou plusieurs des transducteurs du deuxième groupe étant intercalés entre deux quelconques desdites zones ;
      - chaque transducteur du premier groupe a pour plus proches voisins des transducteurs du deuxième groupe ;
      - plusieurs desdits transducteurs comprennent chacun un élément en matériau piézo-électrique ainsi qu'un dispositif mécanique appliquant une contrainte de compression audit élément en matériau piézo-électrique ;
      - cette contrainte de compression est supérieure à 7 bars, voire supérieure à 15 bars ;
      - chaque transducteurs est apte à émettre des ondes acoustiques dans le milieu subaquatique à des fréquences supérieures à 50 kilohertz ;
      - le récepteur est apte à capter et convertir sous forme électrique des ondes acoustiques dont la fréquence est comprise dans une bande passante de réception, la bande passante de réception étant comprise entre 0 et 30 kilohertz ;
      - le système de pilotage et d'acquisition est configuré de sorte que les première et deuxième fréquences soient chacune supérieure à 50 kilohertz ;
      - le système de pilotage et d'acquisition est configuré de sorte que la différence entre la première fréquence et la deuxième fréquence soit comprise dans ladite bande passante de réception ;
      - le système de pilotage et d'acquisition est configuré de sorte que la différence entre la première fréquence et la deuxième fréquence soit inférieure à 30 kilohertz ;
      - le système de pilotage et d'acquisition est configuré pour faire varier la différence entre ladite première fréquence et ladite deuxième fréquence, d'une exécution de l'étape a) à l'autre ;
      - le système de pilotage et d'acquisition est configuré en outre pour, après chaque exécution de l'étape a), acquérir un signal d'écho additionnel, de fréquence égale à ladite première fréquence ou à ladite deuxième fréquence, capté par l'un au moins desdits transducteurs en réponse à l'émission réalisée à l'étape a) ;
      - le système de pilotage et d'acquisition est configuré pour déterminer une image représentative d'une partie du milieu subaquatique sur la base desdits signaux d'écho additionnels ;
      - le système de pilotage et d'acquisition est configuré pour déterminer des profondeurs desdits points du fond du fond sur la base desdits signaux d'écho additionnels ;
      - le système de pilotage et d'acquisition est configuré en outre pour, à l'étape a), piloter lesdits transducteurs de manière à ce qu'un angle d'incidence, formé entre ledit axe de superposition et un axe perpendiculaire au fond du milieu subaquatique, soit supérieur à un angle d'incidence limite ;
      - l'angle d'incidence limite est égal à 15 degrés.

L'invention concerne également un procédé de caractérisation d'une partie du sous-sol d'un milieu subaquatique, mis en œuvre au moyen d'un échosondeur paramétrique tel que décrit ci-dessus, au cours duquel le système de pilotage et d'acquisition exécute les étapes suivantes :
a) piloter lesdits transducteurs pour qu'ils émettent dans un milieu subaquatique une première onde acoustique ayant une première fréquence et une deuxième onde acoustique ayant une deuxième fréquence, la première onde et la deuxième onde se superposant l'une à l'autre le long d'un axe de superposition dirigé vers un point du fond du milieu subaquatique, chaque transducteur étant piloté par un signal d'émission, les différents signaux d'émission des différents transducteurs présentant des retards prédéterminés les uns par rapport aux autres, et
b) acquérir un signal d'écho, de fréquence égale à la différence entre ladite première fréquence et ladite deuxième fréquence, capté par ledit récepteur en réponse à l'émission réalisée à l'étape a),
l'ensemble des étapes a) et b) étant exécuté plusieurs fois, en faisant varier une partie au moins desdits retards d'une exécution de l'étape a) à l'autre, de manière à modifier l'orientation dudit axe de superposition d'une exécution de l'étape a) à l'autre, le procédé comprenant en outre l'étape suivante :
c) déterminer, à partir des signaux d'écho acquis lors des différentes exécutions de l'étape b), une image bidimensionnelle ou tridimensionnelle représentative du contenu du sous-sol du milieu subaquatique sous chacun desdits points du fond.

Les caractéristiques optionnelles présentées ci-dessus en termes de dispositif peuvent également s'appliquer au procédé qui vient d'être décrit.

### Description détaillée d'exemples de réalisation

La description qui va suivre en regard des dessins annexés, donnés à titre d'exemples non limitatifs, fera bien comprendre en quoi consiste l'invention et comment elle peut être réalisée.

Sur les dessins annexés :
la figure 1 représente schématiquement un navire muni d'un échosondeur selon un premier mode de réalisation vu de côté,
la figure 2 représente schématiquement un navire muni d'un échosondeur selon un premier mode de réalisation vu de dessous,
la figure 3 représente schématiquement différents éléments de l'échosondeur des figures 1 et 2,
la figure 4 représente schématiquement une façon de piloter des transducteurs de l'échosondeur des figures 1 et 2,
la figure 5 représente schématiquement des faisceaux d'ondes acoustiques, émis à un premier instant par l'échosondeur des figures 1 et 2,
la figure 6 représente schématiquement des faisceaux d'ondes acoustiques, émis à un deuxième instant par l'échosondeur des figures 1 et 2,
la figure 7 représente schématiquement des faisceaux d'ondes acoustiques, émis à un troisième instant par l'échosondeur des figures 1 et 2,
la figure 8 représente schématiquement des étapes d'un procédé de caractérisation d'une partie du sous-sol d'un milieu subaquatique, mis en œuvre par l'échosondeur des figures 1 et 2,
la figure 9 représente schématiquement la zone occupée, à un instant donné, par une première onde acoustique émise par l'échosondeur des figures 1 et 2, vue de face,
la figure 10 représente schématiquement la zone occupée, à un instant donné, par une première onde acoustique émise par l'échosondeur des figures 1 et 2, vue de côté,
la figure 11 représente schématiquement, pour le même instant que sur les figures 9 et 10, la zone occupée par une deuxième onde acoustique émise par l'échosondeur, vue de côté ; elle représente aussi, au même instant, les zones occupées par des deuxièmes ondes acoustiques supplémentaires émises par l'échosondeur,
la figure 12 représente schématiquement, pour le même instant que sur les figures 9 et 10, la zone occupée par une deuxième onde acoustique émise par l'échosondeur, vue de face,
la figure 13 représente schématiquement, simultanément, au même instant que pour les figures 9 et 11, les zones occupées respectivement par ces première et deuxièmes ondes acoustiques, vues de face,
la figure 14 représente les spectres fréquentiels des ondes acoustiques des figures 9 à 13,
la figure 15 représente schématiquement un navire muni d'un échosondeur selon un deuxième mode de réalisation, vu de dessous,
la figure 16 représente schématiquement des faisceaux d'ondes acoustiques, émis à un quatrième instant par l'échosondeur de la figure 15,
la figure 17 représente schématiquement des faisceaux d'ondes acoustiques, émis à un cinquième instant par l'échosondeur de la figure 15,
la figure 18 représente schématiquement des faisceaux d'ondes acoustiques, émis à un sixième instant par l'échosondeur de la figure 15, et
la figure 19 représente schématiquement les positions, par rapport au navire de la figure 1, de différents points du fond sondés par l'échosondeur qui équipe ce navire, vues de dessus.

### Présentation d'ensemble

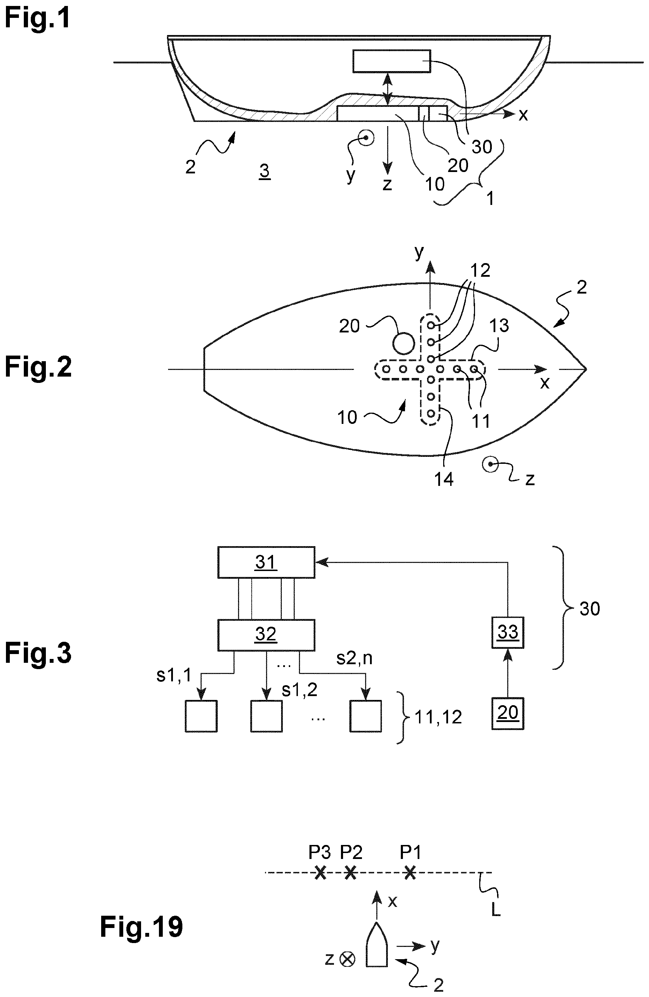

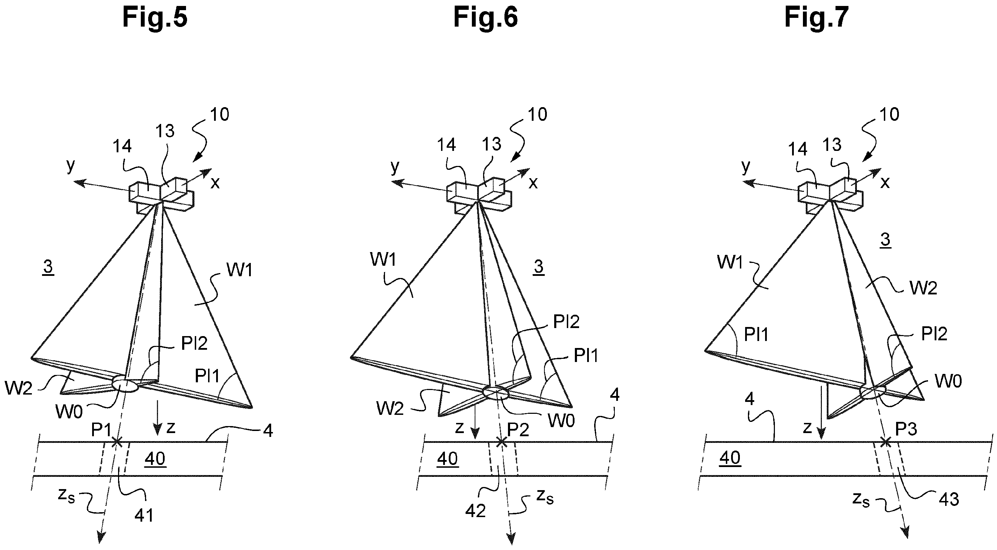

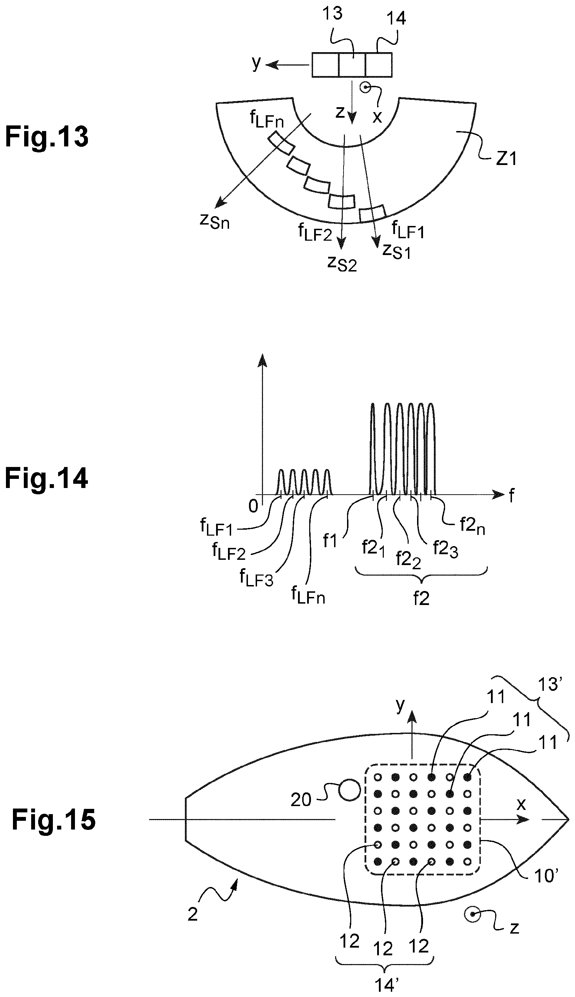

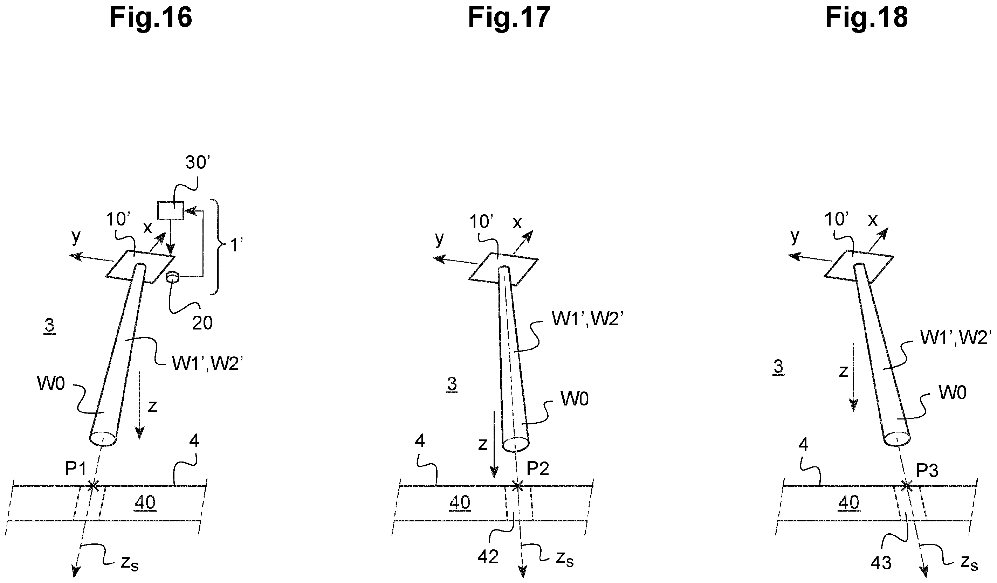

Les figures 1 et 2 d'une part, et la figure 15 d'autre part représentent schématiquement un premier, et, respectivement, un deuxième mode de réalisation d'un échosondeur 1 ; 1' paramétrique particulier, permettant de relever une image bidimensionnelle ou tridimensionnelle du contenu du sous-sol 40 d'un milieu subaquatique 3 (c.f. : figures 5 et 16 notamment), de manière à la fois rapide, précise et commode.

Le milieu subaquatique 3 en question s'étend sous la surface de l'eau, sous et éventuellement autour de l'échosondeur 1 ; 1'. Son sous-sol 40, essentiellement solide, est composé par exemple de sédiments, tels que du sable, ou de roches. Le fond 4 du milieu subaquatique 3 est situé à la frontière entre l'eau et ce sous-sol 40.

Cet échosondeur 1 ; 1' paramétrique peut équiper un navire 2, submersible ou de surface, accueillant un équipage ou configuré pour manœuvrer sans personne à son bord. Il comprend une antenne 10 ; 10' émettrice, pour émettre des ondes acoustiques dans le milieu subaquatique 3 qui l'environne. Cette antenne 10 ; 10' peut par exemple être installée dans un logement prévu à cet effet dans la coque du navire 2, comme cela est représenté sur les figures.

Quel que soit le mode de réalisation, l'antenne 10 ; 10' émettrice comprend plusieurs transducteurs 11, 12 électro-acoustiques. Ces transducteurs sont pilotables indépendamment les uns des autres. Chacun d'entre eux est apte à émettre des ondes acoustiques dans le milieu subaquatique 3, à des fréquences supérieures à 50 kilohertz, voire supérieures à 100 ou même à 150 kilohertz. Il peut par exemple s'agir de transducteurs 11, 12 ultrasonores aptes à émettre des ondes acoustiques dans une bande passante d'émission (bande passante à -3 dB) qui est comprise entre 20 kilohertz et 1 mégahertz.

Au moins trois des transducteurs 11, 12 de l'antenne 10 ; 10' sont non-alignés les uns par rapport aux autres. En d'autres termes, les transducteurs 11, 12 de l'antenne 10 ; 10' ne sont pas uniquement répartis sur une même ligne. Les positions qu'ils occupent sont réparties de manière bidimensionnelle, sur toute une surface donnée, de manière par exemple à former ensemble une croix (comme dans le premier mode de réalisation, de la figure 2) ou une matrice rectangulaire (comme dans le deuxième mode de réalisation, de la figure 15).

Les différences entre les premier et deuxième modes de réalisation de l'échosondeur 1 ; 1', représentés respectivement sur les figures 2 et 15, concernent d'ailleurs principalement la manière de répartir ces transducteurs 11, 12 les uns par rapport aux autres à la surface de l'antenne 10 ; 10', et le nombre de transducteurs que comprend l'antenne 10 ; 10. Ces différences concernent donc aussi la forme des faisceaux W1, W2 ; W1', W2' émis par l'antenne, illustrés sur les figures 5 et 16). Elle concerne également le détail du pilotage de ces transducteurs 11, 12.

Ces deux modes de réalisation ont néanmoins de nombreuses caractéristiques en commun. Aussi, d'un mode de réalisation à l'autre, les éléments communs sont autant que possible repérés par les mêmes signes de référence et ne sont pas nécessairement décrits à chaque fois.

Dans ces deux modes de réalisation, et d'ailleurs quel que soit le mode de réalisation considéré, l'échosondeur 1 ; 1' comprend en outre au moins un récepteur 20 pour capter des ondes acoustiques à basses fréquences. Le récepteur 20 est un transducteur électro-acoustique de type hydrophone. Le récepteur 20 est capable de capter et convertir sous forme électrique des ondes acoustiques dont la fréquence est comprise dans une bande passante de réception qui s'étend notamment en dessous de 30 kilohertz. Cette bande passante de réception, qui correspond par exemple à la bande passante à -3 décibels du récepteur 20, peut par exemple être comprise entre 0 et 20 kilohertz, entre 0 et 30 kilohertz, ou encore entre 10 et 30 kilohertz. Ce récepteur 20 n'est pas nécessairement directif.

Tel que représenté sur les figures, l'échosondeur 1 ; 1' comprend un seul récepteur 20 de ce type. En variante, l'échosondeur pourrait toutefois comprendre plusieurs tels récepteurs formant ensemble une antenne réceptrice. Disposer ainsi de plusieurs récepteurs distincts, situés à des positions différentes sur l'échosondeur, permet une réception sélective d'un point de vue angulaire. Cela permet en effet, par traitement électronique de l'ensemble des signaux captés par ces récepteurs, d'obtenir un ou plusieurs signaux d'écho chacun représentatif d'une onde acoustique qui, avant réception par l'échosondeur, se propageaient dans le milieu subaquatique avec une direction de propagation donnée, sélectionnée par le traitement électronique en question.

A titre d'exemple, dans une variante du premier mode de réalisation de la figure 2, l'antenne réceptrice en question pourrait comprendre quatre récepteurs tels que décrits ci-dessus, les quatre quadrants délimités par les deux branches de l'antenne émettrice en forme de croix de Mills étant alors occupés chacun par l'un de ces récepteurs, disposés en rectangle ou en carré.

Dans d'autres variantes, les différents récepteurs de l'antenne réceptrice pourraient par exemple être situés le long d'une même ligne, pour former une antenne réceptrice linéaire.

L'échosondeur 1 ; 1' comprend aussi un système de pilotage et d'acquisition 30 ; 30' pour piloter les transducteurs 11, 12 de l'antenne 10 ; 10', acquérir les signaux d'écho s_{E} à basses fréquences captés par le récepteur 20, et déterminer à partir de ces signaux d'écho l'image bidimensionnelle ou tridimensionnelle du contenu du sous-sol 40 du milieu subaquatique 3, IM, mentionnée plus haut.

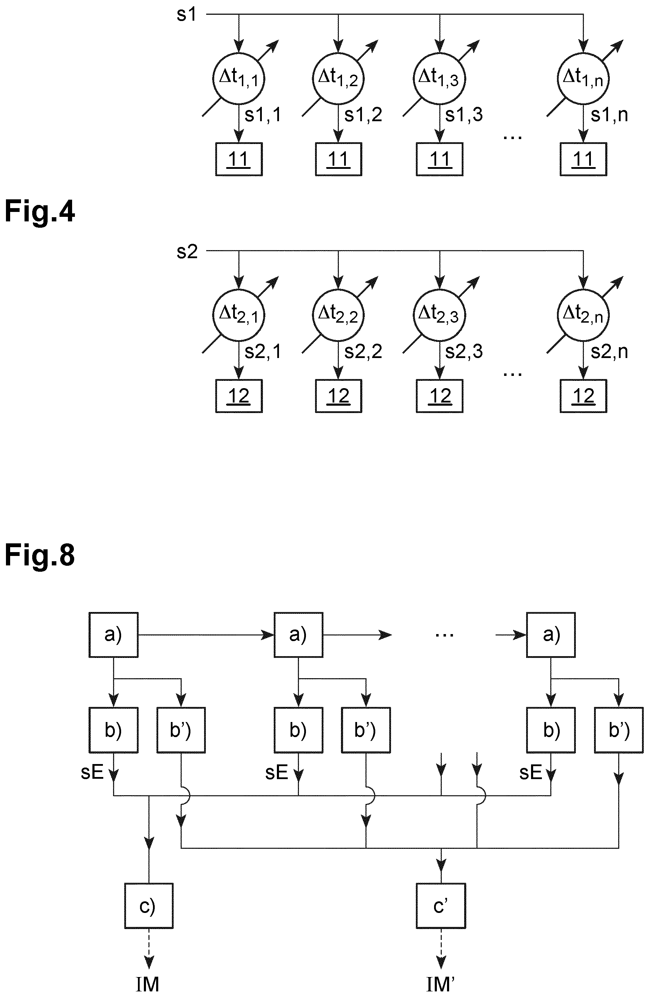

Le système de pilotage et d'acquisition 30 ; 30' est configuré plus précisément pour exécuter les étapes suivantes d'un procédé de caractérisation d'une partie du sous-sol 40 du milieu subaquatique 3 (procédé représenté sur la figure 8) :
a) piloter les transducteurs 11, 12 de l'antenne 10 ; 10' émettrice pour qu'ils émettent dans le milieu subaquatique 3 une première onde acoustique ayant une première fréquence f1 et une deuxième onde acoustique ayant une deuxième fréquence f2, la première onde et la deuxième onde se superposant l'une à l'autre le long d'un axe de superposition z_{S} dirigé vers un point P1, P2, P3 donné du fond 4 du milieu subaquatique (figures 5 à 7), chaque transducteur 11, 12 étant piloté par un signal d'émission s_{1,1} , s_{1,2} , s_{1,3} , s_{2,1} , s_{2,2} , s_{2,3} ... qui lui est associé, les signaux d'émission des différents transducteurs 11, 12 présentant des retards prédéterminés les uns par rapport aux autres (figure 4),
b) acquérir un signal d'écho s_{E}, capté par le récepteur 20 en réponse à l'émission réalisée à l'étape a), et dont la fréquence f_{LF} est égale à la valeur absolue de la différence entre la première fréquence f1 et la deuxième fréquence f2,
   l'ensemble des étapes a) et b) étant exécuté plusieurs fois, en faisant varier une partie au moins desdits retards d'une exécution de l'étape a) à l'autre, de manière à modifier l'orientation de l'axe de superposition z_{S}, d'une exécution de l'étape a) à l'autre, et pour
c) déterminer, à partir des signaux d'écho s_{E} acquis lors des différentes exécutions de l'étape b), l'image IM, bidimensionnelle ou tridimensionnelle, mentionnée plus haut, qui est représentative du contenu du sous-sol 40 du milieu subaquatique 3 sous chacun desdits points P1, P2, P3 du fond 4.

Le système de pilotage et d'acquisition 30 ; 30' est configuré de sorte que les première et deuxième fréquences f1 et f2 soient supérieures à 50 kilohertz, voire supérieures à 100 ou même, comme ici, supérieures à 150 kilohertz. Il est configuré en outre pour que la différence entre les première et deuxième fréquences f1 et f2 soit comprise dans la bande passante de réception mentionnée plus haut. Ici, le système de pilotage et d'acquisition 30 ; 30' est configuré plus précisément pour que la différence entre les première et deuxième fréquences f1 et f2 soit comprise entre 15 et 30 kilohertz. Les signaux d'émission s_{1,1} , s_{1,2} , s_{1,3} , s_{2,1} , s_{2,2} , s_{2,3} ... qui pilotent les transducteurs 11, 12 sont produits par le système de pilotage et d'acquisition 30 ; 30'.

En variante, la différence entre les première et deuxième fréquences f1 et f2 pourrait toutefois être plus faible, cette différence étant par exemple inférieure à 10 kilohertz. Les valeurs des première et deuxième fréquences f1 et f2 pourraient elles aussi être plus faibles que ce qui est indiqué ci-dessus, chacune de ces fréquences pouvant par exemple être comprise entre 20 et 50 kilohertz.

Quoiqu'il en soit, l'écart |f1-f2| entre les première et deuxième fréquences f1 et f2 est de préférence inférieur à un quart de la moyenne arithmétique (f1 +f2)/2 des première et deuxième fréquences f1 et f2. Ici par exemple, cet écart |f1-f2| est compris entre un quart et un sixième de la moyenne arithmétique (f1+f2)/2 des première et deuxième fréquences f1 et f2. Un tel rapport permet d'optimiser l'efficacité du mélange non-linéaire de la première onde acoustique avec la deuxième onde acoustique.

Suite à chaque exécution de l'étape a), une onde acoustique supplémentaire, dont la fréquence f_{LF} est égale à la valeur absolue de la différence entre la première fréquence f1 et la deuxième fréquence f2, est générée directement dans l'eau, le long de l'axe de superposition z_{S}, par mélange non linéaire de la première onde acoustique avec la deuxième onde acoustique. Cette onde acoustique supplémentaire est appelée « onde basse fréquence » dans la suite. Dans la littérature spécialisée, une telle onde acoustique, produite directement dans le milieu subaquatique par mélange non-linéaire, est parfois appelée "onde paramétrique", ou encore "onde secondaire" (les première et deuxième ondes acoustiques étant alors appelées "ondes primaires"). Elle se propage parallèlement à l'axe de superposition z_{S}, et elle atteint donc le point P1, P2, P3, ... du fond 4 vers lequel est dirigé l'axe de superposition z_{S} (effets éventuels de réfraction acoustique mis à part).

Cette onde basse fréquence pénètre généralement mieux dans le sous-sol 40 du milieu subaquatique 3 que les première et deuxième ondes acoustiques, dont les fréquences f1 et f2 sont plus élevées. Elle permet ainsi de sonder plus en profondeur le contenu de ce sous-sol, sous le point P1, P2, P3 en question. Dans ce sous-sol 40, lorsque l'onde acoustique basse fréquence rencontre un élément dont la rigidité ou la densité est différente du reste du sous-sol, tel qu'une portion de pipeline enfouie sous des sédiments, une partie de l'onde basse fréquence est réfléchie par cet élément à la manière d'un écho. Un instant de réception de cette onde acoustique par l'échosondeur renseigne alors sur la distance entre l'échosondeur et l'élément réfléchissant ainsi détecté.

Plus généralement, l'onde acoustique de fréquence f_{LF}, réfléchie par le sous-sol 40 du milieu subaquatique en réponse à l'émission des première et deuxième ondes acoustiques, contient des informations qui renseignent sur la présence d'éléments plus ou moins réfléchissants dans une colonne 41, 42, 43 de ce sous-sol 40 qui s'étend sous le point P1, P2, P3 du fond 4 vers lequel est dirigé l'axe de superposition z_{S}, et sur la profondeur à laquelle se situent chacun de ces éléments, au sein de cette colonne. En d'autres termes, cette onde acoustique réfléchie permet de déterminer une sorte d'image unidimensionnelle du contenu du sous-sol 40, le long de cette colonne 41, 42, 43 (figures 5 à 7). C'est cette onde acoustique réfléchie, dont la fréquence est égale à la valeur absolue de la différence entre les première et deuxième fréquences f1 et f2, qui est captée à l'étape b) par le récepteur 20 et qui est convertie sous forme électrique pour donner le signal d'écho s_{E}.

Comme les directions de propagation des première et deuxième ondes acoustiques émises à l'étape a) dépendent directement des valeurs des retards entre signaux d'émission, la direction de l'axe de superposition z_{S}, le long duquel se superposent ces première et deuxième ondes, peut être contrôlée de manière purement électronique en ajustant ces retards, afin de faire varier l'orientation de l'axe de superposition z_{S} d'une exécution à l'autre de l'étape a).

Les contenus respectifs de plusieurs colonnes élémentaires 41, 42, 43, qui s'étendent sous différents points P1, P2, P3 du fond 4, sont alors sondés, ici successivement, lors des différentes exécutions des étapes a) et b). A l'étape c), l'image bi- ou tridimensionnelle IM déterminée par le système de pilotage et d'acquisition 30 ; 30', peut par exemple être obtenue en plaçant côte à côte, colonne par colonne, les images sonar unidimensionnelle représentatives du contenu de ces différentes colonnes 41, 42, 43.

A titre d'exemple, lorsque l'orientation de l'axe de superposition z_{S} varie d'une exécution de l'étape a) à l'autre de manière à ce que cet axe pointe successivement vers différents points P1, P2, P3 répartis, sur le fond 4 du milieu subaquatique 3, le long d'une même ligne, l'échosondeur 1 ; 1' relève alors une image IM bidimensionnelle correspondant à une vue en coupe du sous-sol 40 du milieu subaquatique 3, selon un plan de coupe passant par cette ligne (et par l'antenne 10 ; 10' de l'échosondeur).

L'échosondeur 1 ; 1' paramétrique selon l'invention permet donc, de manière purement électronique, grâce à un pilotage approprié des transducteurs 11, 12 de l'antenne 10 ; 10', de relever une image IM, bidimensionnelle ou tridimensionnelle, représentative du contenu du sous-sol 40 du milieu subaquatique. De manière avantageuse, cette image est obtenue plus rapidement qu'en faisant pivoter mécaniquement un unique émetteur de grande dimension. Cela permet aussi de compenser « en temps réel » (avec un temps de latence très bref typiquement inférieur à 0,1 seconde), à l'émission, les mouvements parasites de roulis ou de tangage de l'échosondeur 1 ; 1', de sorte que les ondes acoustiques émises pointent dans des directions bien déterminées, indépendamment de ces mouvements parasites.

Après cette présentation des principales caractéristiques de l'échosondeur 1 ; 1', sa structure et son fonctionnement peuvent maintenant être décrits plus en détail. Certaines caractéristiques des modules électriques et des transducteurs 11 ; 12 employés seront présentées dans un premier temps.

Le structure de l'antenne 10 émettrice du premier mode de réalisation, à structure « en croix de Mills », et son mode de pilotage, seront décrits dans un deuxième temps, en référence aux figures 2 et 5 à 7.

Le structure de l'antenne 10' émettrice du deuxième mode de réalisation et son mode de pilotage seront décrits ensuite, en référence aux figures 15 à 18.

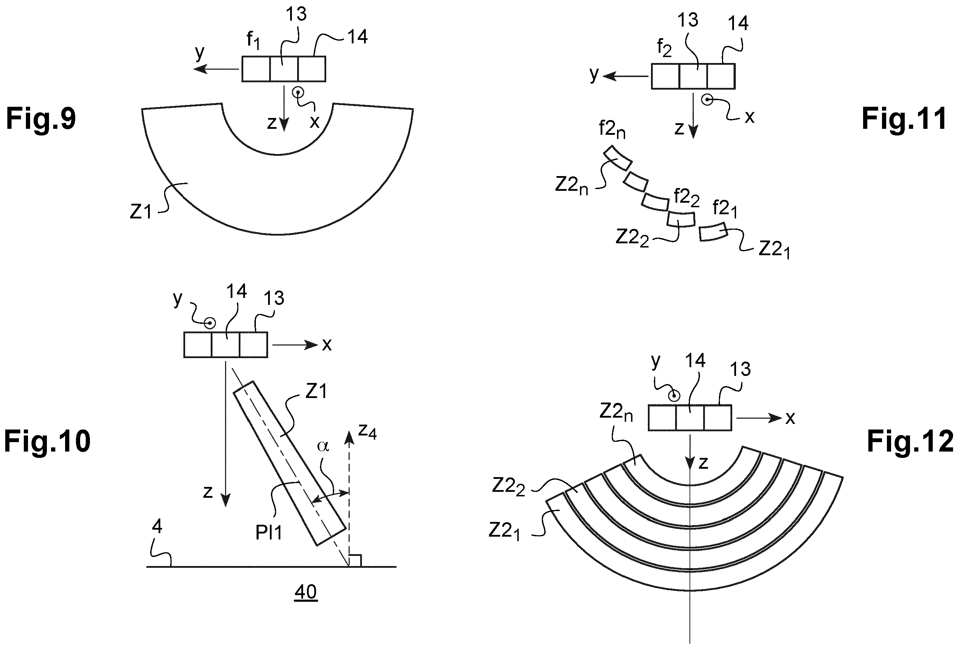

Des techniques d'émission et d'acquisition, permettant d'augmenter la cadence d'acquisition de l'image bi- ou tridimensionnelle du sous-sol 40 du milieu subaquatique par une sorte de multiplexage, sont décrites ensuite. Une version de cette technique, correspondant en quelque sorte à un multiplexage fréquentiel est décrite en référence aux figures 9 à 14. Ces techniques sont applicables aussi bien au premier qu'au deuxième mode de réalisation.

### Transducteurs et électronique de pilotage

Comme expliqué ci-dessus, grâce à son antenne 10 ; 10' formée de plusieurs transducteurs 11 ; 12 distincts, l'échosondeur 1 ; 1' paramétrique selon l'invention peut être dépointé de manière purement électronique, à la manière d'une échosondeur multifaisceaux non-paramétrique, ce qui particulièrement intéressant.

Mais, comme il s'agit d'un échosondeur paramétrique, il est crucial que les ondes acoustiques émises aient des puissances acoustiques très élevées. En effet, l'efficacité du processus paramétrique de mélange non-linéaire dans l'eau est généralement faible, de l'ordre de quelques pourcents au plus, et décroit fortement lorsque la puissance des ondes acoustiques à mélanger diminue.

Pour atteindre les puissances acoustiques souhaitées, alors même qu'une partie seulement de la surface de cette antenne 10 ; 10' contribue à l'émission d'ondes acoustiques, on réalise ici chaque transducteur 11, 12 de l'antenne 10 ; 10' à partir d'un ou plusieurs éléments en matériau piézo-électrique, soumis à une forte contrainte de compression par à un dispositif mécanique, par exemple du type vis-écrou. En l'absence d'excitation électrique, ce ou ces éléments piézo-électriques sont donc soumis à cette forte précontrainte. Cela permet d'appliquer ensuite des tensions d'alimentation très élevées aux éléments piézo-électriques (supérieures à plusieurs centaines de volts), et donc de générer des ondes acoustiques très intenses, tout en évitant que ces éléments ne travaillent en extension, limitant les risques de casse. En pratique, la contrainte de compression appliquée aux éléments piézo-électriques par le dispositif mécanique en question est au moins supérieure à 7 bars (en l'absence d'excitation électrique), voire supérieure à 15 bars. Et chaque transducteur 11, 12 de l'antenne 10 ; 10' est capable d'émettre une onde acoustique ayant, à proximité immédiate du transducteur, une densité de puissance par unité de surface supérieure ou égale à 20 watts par centimètre carré.

Dans une variante de l'échosondeur pour laquelle les première et deuxième fréquences seraient plus basses qu'ici, par exemple de l'ordre de 10 kilohertz au lieu d'être supérieures à 150 kilohertz, la contrainte de compression appliquée aux éléments piézo-électriques mentionnés ci-dessus serait encore plus grande, par exemple supérieure à 100 bars.

Quant au système de pilotage et d'acquisition 30 ; 30' de l'échosondeur 1 ; 1', il comprend ici
- une unité logique 31, qui comprend au moins un processeur et une mémoire,
- un module de conditionnement 32, qui délivre les signaux d'émission s_{1,1}, s_{1,2}, s_{1,3}, s_{2,1}, s_{2,2}, s_{2,3} ... sous une forme adaptée pour piloter les transducteurs 11, 12, et
- un module d'acquisition 33, pour amplifier et convertir à un format numérique les signaux d'écho s_{E} captés par le récepteur 20, avant de les transmettre à l'unité logique 31.

Le module de conditionnement 32 produit les signaux d'émission s_{1,1} , s_{1,2} , s_{1,3} , s_{2,1} , s_{2,2} , s_{2,3} ...à partir de signaux reçus de l'unité logique 31. Il peut comprendre un ou plusieurs convertisseurs numérique-analogique, ainsi que des filtres pour mettre en forme les signaux d'émission ou pour réaliser des adaptations d'impédances avec transducteurs 11, 12. Quoiqu'il en soit, le module de conditionnement 32 comprend des amplificateurs, ici un par transducteur 11, 12, chacun apte à délivrer une tension électrique de sortie d'une centaine de volts au moins, pour piloter le transducteur correspondant. Ces amplificateurs, en l'occurrence du type à modulation de largeur d'impulsion (ou PWM, c'est-à-dire « Pulse Width Modulation », en anglais), permettent d'amplifier les signaux d'émission pour que leurs amplitudes soient assez élevées pour générer des ondes acoustiques ayant une densité de puissance par unité de surface supérieure à 10, voire à 20 watts par centimètre carré. Ici, l'onde acoustique générée par chaque transducteur, considéré seul, a une densité de puissance par unité de surface, qui, à proximité immédiate de l'antenne 10 ; 10' (par exemple à une distance de l'antenne comprise entre 10 et 50 cm), est comprise plus précisément entre 10 et 40 watts par centimètre carré.

La puissance totale de la première, ou de la deuxième, onde ultrasonore émise par l'antenne 10 est ici de l'ordre de 218 dB. Cette puissance d'émission est plutôt réduite par rapport à ce qui est utilisé dans un sonar paramétrique usuel. Pour autant, l'image obtenue représentative du contenu du sous-sol 40 du milieu est de bonne qualité, témoignant alors d'un bon rapport signal sur bruit. Ce bon rapport signal sur bruit (malgré la puissance d'émission réduite) s'explique par exemple par le fait que les objets enfouis (et ici scannés) le sont sous quelques mètres de fond, et non quelques dizaines de mètres comme c'est le cas habituellement. De plus ici, le bruit pouvant éventuellement parasiter les mesures provient uniquement de la réverbération des ondes dans ces couches de sédiment. Puisque le faisceau paramétrique est très fin, cette réverbération est très réduite, et donc le signal est exploitable.

Pour le premier mode de réalisation de la figure 2, la puissance électrique totale consommée par l'électronique de pilotage, lors d'une séquence d'émissions, est comprise ici entre 2 et 5 kilowatts. Ainsi, à la résonance, pour chaque transducteur 11, 12 de l'antenne 10 ; 10' constitué d'éléments piézo-électriques, 90% de l'énergie appliquée est convertie en énergie acoustique.

Par ailleurs, dans les modes de réalisation décrits ici, les transducteurs de l'antenne 10 ; 10' sont répartis en un premier groupe 13 ; 13' de transducteurs 11 et un deuxième groupe 14 ; 14' de transducteurs 12 (figures 2 et 15), et le système de pilotage et d'acquisition 30 ; 30' est configuré pour :
- piloter chaque transducteur 11 du premier groupe par un premier signal d'émission s_{1,1}, s_{1,2}, s_{1,3} ...variant au cours du temps à la première fréquence f1 (la première onde acoustique mentionnée plus haut étant alors émise par ce premier groupe de transducteurs), et pour
- piloter chaque transducteur 12 du deuxième groupe par un deuxième signal d'émission s_{2,1}, s_{2,2}, s_{2,3} ... variant au cours du temps à la deuxième fréquence f2 (la première onde acoustique mentionnée plus haut étant alors émise par ce deuxième groupe de transducteurs).

Les premiers signaux d'émission s_{1,1}, s_{1,2}, s_{1,3} ... présentent des retards prédéterminés, les uns par rapport aux autres. Plus précisément, chacun de ces premiers signaux présente un premier retard Δt_{1,1}, Δt_{1,2}, Δt_{1,3} ..., par rapport à un premier signal de référence s₁ (qui varie à la fréquence f1), comme cela est représenté schématiquement sur la figure 4. On peut d'ailleurs prévoir que les différents premiers signaux d'émission s_{1,1}, s_{1,2}, s_{1,3} ... soient obtenus chacun à partir ce même signal de référence s1, par décalage temporel. Modifier l'un de ces premiers retards Δt_{1,1}, Δt_{1,2}, Δt_{1,3} ... revient bien sûr à modifier le retard du premier signal d'émission correspondant, par rapport aux autres signaux d'émission.

De la même manière, les deuxièmes signaux d'émission s_{2,1}, s_{2,2}, s_{2,3} ...... présentent des retards prédéterminés, les uns par rapport aux autres. Ici, chacun de ces deuxièmes signaux présente un deuxième retard Δt_{2,1}, Δt_{2,2}, Δt_{2,3} ... par rapport à un deuxième signal de référence s₂, qui varie à la fréquence f2. Là aussi, les deuxièmes signaux d'émission s_{2,1}, s_{2,2}, s_{2,3} ... peuvent par exemple être obtenus à partir de ce même deuxième signal de référence s2, par décalage temporel.

### Antenne émettrice en croix de Mills

Comme déjà indiqué, dans le premier de mode de réalisation, l'antenne 10 émettrice de l'échosondeur 1 a une forme de croix à deux branches, appelée habituellement croix de Mills (figure 2).

En l'occurrence, les transducteurs 11 du premier groupe de transducteurs mentionné ci-dessus, piloté à la première fréquence f1, forment la première branche 13 de l'antenne. Ils sont disposés en ligne les uns à la suite des autres le long de cette première branche 13.

Et les transducteurs 12 du deuxième groupe de transducteurs, piloté à la deuxième fréquence f2, forment la deuxième branche 14 de l'antenne. Ils sont eux aussi disposés en ligne les uns à la suite des autres, le long de cette deuxième branche 14.

Dans ce premier mode de réalisation, à l'étape a), la première onde acoustique est donc émise ici par les transducteurs 11 de la première branche 13 de l'antenne, tandis que la deuxième onde acoustique est émise par les transducteurs 12 de la deuxième branche 14 de l'antenne.

Les première et deuxième branches 13, 14 forment entre elles un angle compris par exemple entre 60 et 120 degrés. Ici, ces deux branches sont plus précisément perpendiculaires l'une à l'autre.

Un tel agencement de transducteurs, disposés en croix, est connu pour des échosondeurs classiques non-paramétriques, pour lesquels l'une des branches de transducteurs est employée en émission tandis que l'autre est employée en réception. Mais le fonctionnement de l'échosondeur 1 est ici très différent d'un tel échosondeur classique. En effet les *deux* branches de la croix sont ici employées en émission, tandis que la réception est réalisée, à une fréquence différente de celles d'émission, par le récepteur 20, distinct de l'antenne 10, ou en variante, par l'antenne réceptrice mentionnée plus haut.

Ici, l'antenne 10 est montée de sorte que l'axe x de la première branche 13 s'étende parallèlement à un axe longitudinal du navire 2 qui s'étend de la poupe à la proue du navire. Et l'axe y de la deuxième branche 14 de l'antenne s'étend ici transversalement par rapport au navire 2. L'axe y est ainsi perpendiculaire à l'axe longitudinal du navire et parallèle à son pont. Cette disposition de l'antenne 10 par rapport au navire rend une compensation électronique des mouvements parasites de tangage et roulis du navire commode à mettre en œuvre. L'axe z, représenté sur les figures à titre de repère, est perpendiculaire à l'antenne 10, c'est-à-dire perpendiculaire à ses deux branches 13 et 14.

Le long de chaque branche de l'antenne 10, les transducteurs 11, 12 sont répartis sur une longueur qui est ici supérieure à 20 centimètres, et même supérieure à 50 centimètres. Du fait de sa longueur, chacune de ces branches est apte à émettre des ondes acoustiques ayant, parallèlement à cette branche, une ouverture angulaire réduite.

Dans ce premier mode de réalisation, le système de pilotage et d'acquisition 30 de l'échosondeur 1 est configuré pour, à l'étape a), donner aux premiers retards Δt_{1,1} , Δt_{1,2} , Δt_{1,3} ..., qui sont appliqués aux différents premiers signaux d'émission s_{1,1} , s_{1,2} , s_{1,3} ..., des valeurs telles que la première onde acoustique se propage parallèlement à un premier plan d'émission Pl1, sous la forme d'un premier faisceau W1 ayant une section transverse étroite dans une direction perpendiculaire au premier plan d'émission Pl1, et très allongée parallèlement à ce plan (figure 5). Dans ce plan d'émission, le premier faisceau W1 présente une grande ouverture angulaire, par exemple de plusieurs dizaines de degrés, tandis qu'il présente une ouverture angulaire réduite perpendiculairement à ce plan d'émission, par exemple inférieure à 5 degrés (cette ouverture angulaire est définie par exemple comme la largeur angulaire, à mi-hauteur du maximum du pic représentant l'intensité acoustique de la première onde dans une section transverse du premier faisceau W1). Ce premier faisceau W1 a ainsi la forme d'une nappe peu épaisse, en forme d'éventail, souvent appelée « fauchée ». Ce premier faisceau W1 représente la zone du milieu subaquatique 3 balayée par la première onde acoustique lors de sa propagation.

Pour obtenir que la première onde acoustique se propage sous la forme de ce premier faisceau W1, le système de pilotage et d'acquisition 30 donne par exemple à chacun des premiers retards Δt_{1,1} , Δt_{1,2} , Δt_{1,3} ... une valeur qui est proportionnelle à une position occupée par le transducteur 11 correspondant (transducteur n°1, n°2, n°3 etc...) le long de la première branche 13 (à titre d'exemple, si ces premiers retards ont tous la même valeur, c'est-à-dire si les premiers signaux d'émission n'ont pas de décalage temporel les uns par rapport aux autres, le premier plan d'émission Pl1, parallèlement auquel se propage la première onde acoustique, s'étend perpendiculairement à l'axe x de la première branche 13 de l'antenne). Le premier plan d'émission Pl1 comprend un axe qui est perpendiculaire à la première branche 13, en l'occurrence par l'axe y, et pivote autour de cet axe en fonction des valeurs données aux premiers retards (en l'occurrence, en fonction du coefficient de proportionnalité entre les valeurs de ces retards et les positions des transducteurs 11 le long de la première branche 13 de l'antenne).

De la même manière, à l'étape a), le système de pilotage et d'acquisition 30 donne aux deuxièmes retards Δt_{2,1}, Δt_{2,2}, Δt_{2,3} ... des valeurs telles que la deuxième onde acoustique se propage parallèlement à un deuxième plan d'émission Pl2, sous la forme d'un deuxième faisceau W2 ayant une section transverse étroite selon une direction perpendiculaire au deuxième plan d'émission P2, et très allongée parallèlement à ce plan (figure 5). Le deuxième faisceau W2 a une forme similaire au premier faisceau W1. En particulier, le deuxième faisceau W2 présente une ouverture angulaire réduite perpendiculairement au deuxième plan d'émission Pl2, par exemple inférieure à 5 degrés (largeur à mi-hauteur du maximum). Le deuxième plan d'émission Pl2, sur lequel est centré le deuxième faisceau W2, comprend un axe perpendiculaire à la deuxième branche 14 de l'antenne, en l'occurrence par l'axe x, autour duquel il peut pivoter, en fonction des valeurs données aux deuxième retards.

L'axe de superposition z_{S} est situé à l'intersection entre le premier plan d'émission Pl1 et le deuxième plan d'émission Pl2 (figures 5 à 7).

Et les première et deuxième ondes se superposent l'une à l'autre principalement au sein d'un faisceau commun Wo, formé par l'intersection du premier faisceau W1 et du deuxième faisceau W2, et centré sur l'axe de superposition z_{S}. En d'autres termes, c'est seulement au sein de ce faisceau commun Wo que les première et deuxième ondes présentent une intensité acoustique substantielle. C'est donc au sein de ce faisceau commun Wo que l'onde acoustique à basse fréquence est générée avec efficacité.

Le faisceau commun Wo, approximativement conique, a une ouverture angulaire réduite, par exemple inférieure à 2 degrés, puisque chacun des premier et deuxième faisceaux W1, W2 forme la nappe peu épaisse décrite ci-dessus. La section transverse de l'onde acoustique à basse fréquence, générée par mélange non-linéaire dans l'eau, est donc peu étendue (d'autant que le mode de génération de cette onde, non-linéaire, tend encore à réduire son extension transverse). Cela permet de sonder le sous-sol 40 du milieu subaquatique avec une bonne résolution latérale.

Afin de sonder le contenu de ce sous-sol 40 sous différents points P1, P2, P3 du fond 4, le système de pilotage et d'acquisition 30 fait ici varier les deuxièmes retards Δt_{2,1}, Δt_{2,2}, Δt_{2,3} ... d'une exécution de l'étape a) à l'autre, de manière à faire pivoter le deuxième plan d'émission Pl2 autour de l'axe x. Un angle d'inclinaison, formé entre l'axe z et le deuxième plan d'émission Pl2, varie ainsi, d'une exécution de l'étape a) à l'autre (figures 5 à 7). Ce pivotement du deuxième plan d'émission Pl2 permet de faire varier l'orientation de l'axe de superposition z_{S} (qui, lors de ces exécutions successives, peut alors balayer tout l'éventail formé par le premier faisceau W1).

Cette manière de balayer différents points P1, P2, P3 du fond 4 est illustrée par l'ensemble des figures 5 à 7, qui représentent schématiquement les premier et deuxième faisceaux W1 et W2 formés par les première et deuxième ondes acoustiques, pour trois exécutions successives de l'étape d'émission a).

Par ailleurs, au cours de ce balayage, à l'étape d'émission a), le système de pilotage et d'acquisition 30 pilote les transducteurs 11, 12 de l'antenne 10 de manière à ce qu'un angle d'incidence, formé entre l'axe de superposition z_{S} et un axe perpendiculaire au fond du milieu subaquatique, z4, soit supérieur à un angle d'incidence limite. Cet angle d'incidence limite est égal ici à 15 degrés.

On évite ainsi que l'onde acoustique à basse fréquence, générée le long de l'axe de superposition z_{S}, n'atteigne le fond 4 en incidence normale (c'est à dire avec un angle d'incidence nul), et cela pendant tout le balayage du fond.

S'écarter ainsi d'une incidence normale permet d'éviter que des ondes acoustiques à basse fréquence, réfléchies de manière spéculaire ou quasi-spéculaire par le fond 4 ou par l'interface entre deux couches sédimentaires différentes, ne soit renvoyées en direction de l'échosondeur 1. Cela est intéressant car l'intensité de telles ondes, réfléchies ainsi de manière spéculaire, est généralement nettement supérieure à l'intensité des ondes acoustiques réfléchies par des objets enfouis tels que des pipelines, qui, elles, sont réfléchies principalement de manière diffuse. En incidence normale, les ondes acoustiques réfléchies de manière spéculaire par le fond, beaucoup plus intenses, masqueraient donc les ondes acoustiques provenant des objets enfouis à détecter, rendant la détection de tels objets plus difficile qu'ici.

Dans le mode de balayage décrit ici, pour sonder le sous-sol 40 avec un angle d'incidence supérieur à l'angle d'incidence limite, le système de pilotage et d'acquisition 30 ajuste les premiers retards Δt_{1,1}, Δt_{1,2}, Δt_{1,3} ... de sorte que le premier plan d'émission Pl1 soit incliné, d'un angle α, par rapport à l'axe perpendiculaire au fond z4 (l'angle α est l'angle formé entre le plan Pl1 et l'axe z4). L'angle α est supérieur à l'angle d'incidence limite mentionné plus haut. L'angle α et l'axe z4 sont représentés sur la figure 10, qui présente aussi des aspects relatifs à l'acquisition à haute cadence. L'angle α est par exemple compris entre 15 et 30 degrés.

Quant aux deuxièmes retards Δt_{2,1}, Δt_{2,2}, Δt_{2,3} ..., ils varient d'une exécution de l'étape a) à l'autre, comme décrit plus haut, de manière à faire pivoter le deuxième plan d'émission Pl2 autour de l'axe x.

Ainsi, tout au long de ce balayage, l'angle d'incidence formé entre l'axe de superposition z_{S} et l'axe perpendiculaire au fond z4 reste supérieur à l'angle α, et reste donc supérieur à l'angle d'incidence limite mentionné plus haut.

La figure 19 représente schématiquement la position des points du fond P1, P2, P3 sondés par l'échosondeur, dans une situation où le fond 4 est horizontal ainsi que l'antenne 10. Dans cette situation, le premier plan d'émission PI1 qui est donc incliné par rapport à la verticale (pour éviter un sondage en incidence normale), en étant en l'occurrence dirigé vers l'avant du navire 2. Les points du fond P1, P2, P3 sondés par l'échosondeur sont alors distribués le long d'une ligne L, qui s'étend sur le fond du milieu subaquatique, en avant du navire 2 et perpendiculairement à l'axe longitudinal de ce navire.

Par rapport au mode de balayage qui vient d'être décrit, on pourrait prévoir en variante de faire varier les premiers retards Δt_{1,1}, Δt_{1,2}, Δt_{1,3} ... d'une exécution de l'étape a) à l'autre, de manière à faire pivoter le premier plan d'émission Pl1 autour de l'axe y, au lieu de faire varier les deuxième retards Δt_{2,1}, Δt_{2,2}, Δt_{2,3} ... .

On pourrait prévoir aussi de faire varier à la fois les premiers retards Δt_{1,1}, Δt_{1,2}, Δt_{1,3} ... et les deuxième retards Δt_{2,1}, Δt_{2,2}, Δt_{2,3}, ... au cours d'une série de plusieurs exécutions successives de l'étape a), par exemple pour relever une image tridimensionnelle, représentative du contenu du sous-sol 40 sous plusieurs points du fond qui ne sont pas tous alignés les uns par rapport aux autres et dont l'ensemble couvre une toute une surface, au fond du milieu subaquatique.

Il est noté que la réalisation de l'échosondeur 1 de ce premier mode de réalisation pose d'importantes difficultés pratiques du point de vue de l'intensité acoustique à émettre. En effet, la surface totale d'émission de cette antenne 10 en croix de Mills est nettement plus petite que pour un émetteur unique de type « piston », ou même que pour l'antenne 10' à matrice d'émetteurs du deuxième mode de réalisation. De plus, une partie seulement de la première onde acoustique se superpose à la deuxième onde acoustique (figure 5). Ainsi, une partie seulement de la première onde, et une partie seulement de la deuxième onde participent à la génération, dans l'eau, de l'onde acoustique basse fréquence, réduisant encore l'efficacité de génération de cette onde basse fréquence.

Mais employer une telle antenne en croix de Mills (dont les deux branches sont pilotées en émission, respectivement à la première fréquence f1, et à la deuxième fréquence f2) permet en contrepartie de simplifier notablement certains aspects de l'électronique de commande des transducteurs (en particulier dans le module de conditionnement 32), par rapport à un échosondeur dont l'antenne est constituée d'une matrice de transducteurs.

En effet, pour une extension donnée de l'antenne et pour une densité donnée de transducteurs à la surface de l'antenne, l'antenne 10' du deuxième mode de réalisation comprend beaucoup plus de transducteurs que celle du premier mode de réalisation. A titre d'exemple, là où l'antenne 10 du premier mode de réalisation comprendra 6×2 transducteurs (6 transducteurs par branche), celle du deuxième mode en comprendra 6×6. Et réduire le nombre de transducteurs permet de simplifier d'autant leur électronique de commande, dont on rappelle qu'elle peut comporter, pour chaque transducteur, un amplificateur apte à délivrer une tension électrique de sortie d'une centaine de volts au moins, variant au cours du temps de manière assez complexe. Rendre cette électronique de commande plus compacte permet en outre de la loger dans une tête de l'échosondeur 1, à proximité de l'antenne 10, simplifiant ainsi considérablement le système de câbles connectant la tête de l'échosondeur au reste du système de pilotage et d'acquisition.

En outre, cet échosondeur 1 paramétrique à antenne 10 en croix de Mills permet, lors de la série d'exécutions successives de l'étape a) décrite ci-dessus, de relever une image sonar tridimensionnelle « conventionnelle », non-paramétrique du milieu subaquatique 3 (obtenue sans mélange de fréquences entre ondes acoustiques), représentative du contenu d'un volume d'observation balayé par le deuxième faisceau W2 lors de cette série d'exécutions de l'étape a).

### Antenne émettrice à matrice de transducteurs

Comme représenté sur la figure 15, dans le deuxième mode de réalisation, les transducteurs 11, 12 de l'antenne 10' émettrice sont disposés de manière à former une matrice à plusieurs lignes et plusieurs colonnes, les transducteurs 11, 12 étant situés respectivement aux différentes intersections entre les lignes et colonnes de la matrice.

En l'occurrence, il s'agit d'une matrice rectangulaire, dont les colonnes sont perpendiculaires aux lignes. Les transducteurs 11, 12 sont donc situés aux nœuds d'un réseau rectangulaire. L'axe parallèle aux lignes de cette matrice est noté x, et l'axe parallèle aux colonnes est noté y. L'axe x est parallèle à l'axe longitudinal du navire 2.

Le long de chaque ligne, et le long de chaque colonne de cette matrice, les transducteurs 11, 12 sont répartis sur une longueur qui est ici supérieure à 20 centimètres, voire supérieure à 50 centimètres.

La façon dont sont agencés les transducteurs 11 du premier groupe 13' (piloté à la première fréquence f1), par rapport à ceux 12 du deuxième groupe 14' (pilotés à la deuxième fréquence f2), est décrite plus bas.

Du point de vue du pilotage, dans ce deuxième mode de réalisation, le système de pilotage et d'acquisition 30' de l'échosondeur 1' est configuré pour, à l'étape a) :
- donner aux premiers retards Δt_{1,1}, Δt_{1,2}, Δt_{1,3} ... des valeurs telles que la première onde acoustique se propage sous la forme d'un premier faisceau W1' collimaté (figure 16), et pour
- donner aux deuxième retards Δt_{2,1}, Δt_{2,2}, Δt_{2,3} ... des valeurs telles que la deuxième onde acoustique se propage sous la forme d'un deuxième faisceau W2', lui aussi collimaté.

Ces premier et deuxième faisceaux W1', W2' sont centrés tous deux sur le même axe, qui constitue l'axe de superposition z_{S}.

Pour émettre la première onde acoustique sous la forme de ce premier faisceau collimaté, le système de pilotage et d'acquisition 30' génère par exemple les premiers signaux d'émission de manière à ce que, pour chaque transducteur 11 du premier groupe 13', le premier signal d'émission s_{1,1}, s_{1,2}, s_{1,3} ... qui aliment ce transducteur 11 présente, par rapport au signal de référence s1, un premier retard Δt_{1,1}, Δt_{1,2}, Δt_{1,3} ... ayant une valeur proportionnelle au produit scalaire d'un vecteur directeur **u**_{ZS} par un vecteur r qui repère la position du transducteur 11 en question à la surface de l'antenne 10'. Le vecteur directeur **u**_{ZS} est un vecteur, par exemple unitaire, dont la direction est celle de l'axe de superposition z_{S}.

Les deuxièmes signaux d'émission sont générés de la même manière que les premiers signaux d'émission, mais bien sûr avec une fréquence égale à la deuxième fréquence f2.

Dans ce deuxième mode de réalisation, les premier et deuxième faisceaux W1', W2' se superposent quasiment entièrement l'un à l'autre (ils coïncident quasiment l'un avec l'autre). Le faisceau commun Wo', au sein duquel est générée l'onde basse fréquence, correspond alors directement à l'un, ou de manière équivalente à l'autre de ces deux faisceaux W1' et W2'. Ces différents faisceaux W1', W2' et Wo' sont approximativement coniques. Chacun des premier et deuxième faisceaux W1' et W2' a une ouverture angulaire réduite, par exemple inférieure à 2 degrés aussi bien dans un premier plan qui contient l'axe de superposition z_{S} et l'axe x que dans un deuxième plan qui contient l'axe de superposition z_{S} et l'axe y (cette ouverture angulaire est la largeur angulaire, à mi-hauteur du maximum du pic représentant l'intensité acoustique de la première ou deuxième onde acoustique, dans une section transverse du premier ou deuxième faisceau).

Afin de sonder le contenu de ce sous-sol 40 sous différents points P1, P2, P3 du fond 4, le système de pilotage et d'acquisition 30' fait varier ici les premiers et deuxième retards Δt_{1,1}, Δt_{1,2}, Δt_{1,3}, Δt_{2,1}, Δt_{2,2}, Δt_{2,3} ..., d'une exécution de l'étape a) à l'autre, de manière à modifier conjointement l'orientation du premier faisceau W1' et celle du deuxième faisceau W2', pour qu'ils restent superposés l'un à l'autre, mais pointent vers un autre point du fond 4.

L'ensemble des figures 16 à 18 représente schématiquement les premier et deuxième faisceaux W1' et W2' formés par les première et deuxième ondes acoustiques pour trois exécutions successives de l'étape d'émission a). L'axe z, représenté sur ces figures à titre de repère et qui est fixe, est perpendiculaire à l'antenne 10'.

De même que dans le premier mode de réalisation, le système de pilotage et d'acquisition 30' est configuré pour, à l'étape a), piloter les transducteurs 11, 12 de l'antenne 10' de manière à ce que l'angle d'incidence, formé entre l'axe de superposition z_{S} et un axe perpendiculaire au fond 4 du milieu subaquatique, soit supérieur à l'angle d'incidence limite mentionné plus haut. Comme expliqué plus haut, cela facilite la détection d'objets enfouis. Pour cela, le système de pilotage et d'acquisition 30' ajuste les premiers et deuxièmes retards Δt_{1,1}, Δt_{1,2}, Δt_{1,3}, Δt_{2,1}, Δt_{2,2}, Δt_{2,3} ... de sorte que l'axe de superposition z_{S} soit incliné par rapport à l'axe perpendiculaire au fond.

Pour que les première et deuxième ondes acoustiques se superposent le plus possible l'une à l'autre, et cela dès le début de leur propagation, il est prévu de mêler les transducteurs 11 du premier groupe 13' aux transducteurs 12 du deuxième groupe 14', à la surface de l'antenne 10', plutôt que de les répartir en deux zones distinctes (dont l'une rassemblerait exclusivement les transducteurs 11 du premier groupe, et dont l'autre rassemblerait exclusivement les transducteurs 12 du deuxième groupe).

Sur l'antenne 10', les transducteurs 11 du premier groupe et ceux 12 du deuxième groupe sont plus précisément répartis de manière alternée. Chaque transducteur 11 du premier groupe 13' a pour plus proches voisins des transducteurs 12 du deuxième groupe 14'. Ici, les transducteurs 11, 12 sont donc répartis à la manière d'un damier, dont chaque case blanche est occupée par l'un des transducteurs 11 du premier groupe, et dont chaque case noire est occupée par l'un des transducteurs 12 du deuxième groupe.

D'autres configurations, dans lesquelles les transducteurs 11 du premier groupe seraient, à la surface de l'antenne 10', mêlés aux transducteurs 12 du deuxième groupe, sont envisageables. A titre d'exemple, les transducteurs pourraient être répartis à la manière d'un damier, dont chaque case blanche serait occupée par deux transducteurs du premier groupe (au lieu d'un seul), et dont chaque case noire soit occupée par deux transducteurs du deuxième groupe (au lieu d'un seul). Ainsi, il est prévu plus généralement que les transducteurs 11 du premier groupe 13' occupent plusieurs zones distinctes de la matrice formée par l'ensemble des transducteurs, un ou plusieurs des transducteurs 12 du deuxième groupe 14' étant intercalés entre deux quelconques de ces zones.

### Acquisition à haute cadence

Lorsque le fond 4 du milieu subaquatique 3 est situé à une profondeur importante par rapport à l'échosondeur 1 ; 1', le relevé, point à point, de l'image IM représentative du contenu du sous-sol 40 de ce milieu peut s'avérer particulièrement long si des dispositions particulières destinées à l'accélérer ne sont pas mises en œuvre.

En effet, en l'absence de telles dispositions, il est nécessaire d'attendre un temps supérieur à la durée d'aller-retour entre l'échosondeur 1 ; 1' et le fond 4 (allerretour à la vitesse du son dans l'eau) entre le sondage du sous-sol sous un premier point P1 du fond 4, et le sondage du sous-sol sous un deuxième point P2 du fond 4, pour éviter une superposition temporelle des signaux d'écho S_{E} provenant de ces deux points P1, P2, qui les rendrait indistinguables.

Pour remédier à cette difficulté et permettre une acquisition rapide de l'image IM représentative du contenu du sous-sol 40 du milieu subaquatique 3, même lorsque ce milieu est profond, le système de pilotage et d'acquisition 30 ; 30' est configuré ici, aussi bien dans le premier que dans le deuxième mode de réalisation, pour faire varier la différence entre ladite première fréquence f1 et ladite deuxième fréquence f2, d'une exécution de l'étape a) à l'autre.

Faire varier la différence entre les première et deuxième fréquences f1 et f2, d'une exécution de l'étape a) à l'autre, permet en quelque sorte de coder de manière fréquentielle l'orientation de l'axe de superposition z_{S} (qui varie d'une exécution de l'étape a) à l'autre). En effet, les différents points P1, P2, P3 du fond 4 sondés par l'échosondeur sont alors sondés par des ondes basse fréquence ayant des valeurs f_{LF1}, f_{LF2}, f_{LF3}, ... f_{LFn} différentes les unes des autres. Les signaux d'écho individuels, s_{E}, qui proviennent de ces différents points, peuvent donc être distingués les uns des autres même s'ils se superposent les uns aux autres d'un point de vue temporel.

Autrement formulé, même si l'ensemble des signaux d'écho s_{E} individuels, reçus suite aux différentes exécutions de l'étape d'émission a), prend la forme d'un même signal d'écho global (acquis par exemple de manière continu par le récepteur 20 et le module d'acquisition 33), dans lequel les différents signaux d'écho individuels se superposent temporellement les uns aux autres (ce signal d'écho global est alors égal, à chaque instant, à la superposition, c'est-à-dire à la somme des signaux d'écho s_{E} individuels), chacun de ces signaux d'écho s_{E} individuels peut être extrait du signal d'écho global, en l'occurrence par filtrage fréquentiel.

Les différentes exécutions de l'étape d'émission a) peuvent alors avoir lieu à bref intervalle de temps les unes des autres, et même simultanément, quelle que soit la profondeur du milieu subaquatique, sans risque de confusion entre les échos individuels provenant des différents points du fond. Cela réduit considérablement la durée nécessaire pour relever l'image IM représentative du contenu du sous-sol 40 de ce milieu.

Réduire ainsi la durée totale de la série d'émissions destinées à sonder le fond permet de réduire l'influence parasite, sur l'image IM, d'éventuels mouvements parasites de l'échosondeur 1 ou d'éventuelles fluctuations des propriétés du milieu subaquatique 3.

Les figures 9 à 14 illustrent certaines caractéristiques des premières et deuxièmes ondes acoustiques émises ainsi lors de plusieurs exécutions successives de l'étape a), au cours desquelles lesquelles la différence entre la première fréquence f1 et la deuxième fréquence f2 varie. Ces figures correspondent au cas du premier mode de réalisation de l'échosondeur 1 (antenne en croix de Mills). Cette technique peut être employée de manière similaire à d'autres modes de réalisation, notamment au deuxième mode de réalisation présenté plus haut.

En l'occurrence, au cours de cette série d'émissions, la première fréquence f1 conserve une valeur f1₀ constante, tandis que la deuxième fréquence varie. Lors des exécutions successives de l'étape a), la deuxième fréquence f2 présente successivement différentes valeurs f2₁, f2₂, f2₃, ... f2ₙ (figures 11 et 14), associées chacune à l'une de ces exécutions (c'est-à-dire associées respectivement à l'exécution numéro 1, à l'exécution numéro 2, etc...). Ces valeurs sont différentes les unes des autres. Elles augmentent par exemple linéairement au cours de ces exécutions successives de l'étape a).

D'une exécution de l'étape a) à l'autre, la fréquence f_{LF} de l'onde acoustique basse fréquence générée dans l'eau varie donc elle aussi, et présente successivement, lors de ces différentes exécutions, des valeurs f_{LF1}, f_{LF2}, f_{LF3}, ... f_{LFn} distinctes les unes des autres (figure 14). Ces différentes valeurs f_{LF1}, f_{LF2}, f_{LF3}, ... f_{LFn} peuvent par exemple être séparées deux à deux de 0,5 kilohertz, et être réparties entre 15 et 25 kilohertz. Ce résultat pourrait bien sûr être obtenu aussi en faisant varier la première fréquence f1 tout en maintenant la deuxième fréquence f2 fixe.

Pour extraire les signaux d'écho individuels s_{E}, reçus en réponse à ces différentes émissions, le système de pilotage et d'acquisition 30 réalise un filtrage fréquentiel du signal d'écho global, qui, ici, est acquis de manière continue par le récepteur 20 au cours du procédé de caractérisation du sous-sol 40. Ce signal d'écho global est filtré, par différents filtres passe-bande, opérant par exemple en parallèle les uns des autres, et centrés respectivement sur les différentes valeurs de fréquence f_{LF1}, f_{LF2}, f_{LF3}, ... f_{LFn} (égales aux différentes valeurs présentées, au cours des exécutions successives de l'étape a), par la différence entre la première et la deuxième fréquence). Les signaux filtrés délivrés par ces différents filtres correspondent alors aux différents signaux d'écho individuels mentionnés ci-dessus, chacun de signaux d'écho individuels permettant par exemple de déterminer une image unidimensionnelle représentative du contenu du sous-sol 40 sous le point P1, P2, P3 du fond visé lors de l'exécution correspondante de l'étape a).

Les caractéristiques spatiales des première et deuxièmes ondes acoustiques émises lors de cette série d'exécutions de l'étape a) sont maintenant présentées, en référence aux figures 9 à 13.

La première onde acoustique est ici émise de manière continue, sans interruption d'une exécution de l'étape a) à l'autre. Elle forme ainsi une même onde acoustique globale, dont la durée est plus importante que celle des deuxièmes ondes émises par la deuxième branche 14 de l'antenne 10 au cours des différentes exécutions de l'étape a).

Sur les figures 9 et 10, on a représenté la zone Z1 du milieu subaquatique 3 occupée par cette première onde, à un instant donné, vue respectivement de face (c'est-à-dire dans un plan perpendiculaire à la première branche 13 de l'antenne 10), et de côté (dans un plan parallèle à cette première branche 13).

Et sur la figure 11, on a représenté les zones Z2₁, Z2₂, ..., Z2ₙ occupées, au même instant que pour la figure 9, par les deuxièmes ondes acoustiques émises lors des différentes exécutions de l'étape a) mentionnées ci-dessus, vues de face. Ces différentes zones sont aussi représentées vue de côté sur la figure 12.

La figure 13 correspond à la superposition des figures 9 et 11. Elle montre, au même instant que pour les figures 9 et 11, les zones Z1 et Z2₁, Z2₂, ..., Z2ₙ occupées respectivement par la première onde acoustique et par les deuxièmes ondes acoustiques en question (vues de face). La figure 13 montre ainsi, d'un point de vue spatial, la variation de la fréquence de l'onde acoustique « basse fréquence » générée par mélange, en fonction de l'orientation de l'axe de superposition (repéré par les signes de référence z_{S1}, z_{S2}, ..., z_{Sn} sur cette figure). Il est noté à ce propos que les figures 9 à 13 sont des vues instantanées des zones occupées par les ondes acoustiques en question, et qu'en ce sens elles sont bien différentes des vues des figures des figures 5 à 7 qui, elles, montrent, pour la première et la deuxième onde acoustique, l'ensemble de la zone balayée par cette onde au cours de sa propagation (cette zone balayée correspondant au faisceau W1, ou W2).

### Image sonar non-paramétrique

L'émission des première et deuxième ondes acoustiques réalisé à l'étape a) permet, en plus du sondage à basse fréquence du sous-sol 40 du milieu subaquatique 3 qui a été décrit ci-dessus, de relever une image sonar « conventionnelle » représentative d'une partie au moins du milieu subaquatique 3. Cette image supplémentaire IM' est une image sonar conventionnelle en ce sens qu'elle est obtenue sans mélange de fréquences dans l'eau, à la différence de l'image IM.

Dans les modes de réalisation décrits ici, le système de pilotage et d'acquisition 30 ; 30' tire avantageusement partie de cette possibilité. En effet, il est configuré ici pour (figure 8) :
- après chaque exécution de l'étape a), exécuter une étape b') d'acquisition d'un signal d'écho additionnel, de fréquence égale à la première fréquence f1 ou à la deuxième fréquence f2, capté par l'un au moins des transducteurs 11, 12 de l'antenne en réponse à l'émission réalisée à l'étape a), et pour
c') déterminer l'image supplémentaire IM' mentionnée ci-dessus, sur la base desdits signaux d'écho additionnels.

Cette disposition permet, en réalisant une seule série d'émissions, c'est-à-dire en réalisant une seule série d'exécutions de l'étape a), de relever à la fois l'image « paramétrique » IM et l'image supplémentaire IM', et de combiner ainsi les avantages :
- d'une imagerie sonar paramétrique à basse fréquence permettant une bonne pénétration dans le sous-sol 40, mais pour laquelle le rapport signal sur bruit est généralement plus faible que pour une imagerie sonar conventionnelle (et qui est donc moins adaptée que cette dernière pour sonder le reste du milieu subaquatique 3), et
- d'une imagerie sonar conventionnelle, pour laquelle le rapport sur bruit est généralement élevé, et qui est bien adaptée pour sonder le reste du milieu subaquatique 3, en particulier pour sonder sa profondeur.

Le système de pilotage et d'acquisition 30 ; 30' est configuré ici pour déterminer, sur la base de ces signaux d'écho additionnels, les profondeurs, au sein du milieu subaquatique 3, des différents points du fond P1, P2, P3 du fond 4 sous lesquels le sous-sol 40 est sondé par l'onde basse fréquence.

Cela permet de combiner un relevé de grande précision de la topographie d'une partie du fond 4 du milieu subaquatique 3, par imagerie sonar conventionnelle, et un relevé du contenu du sous-sol 40 situé sous cette partie du fond 4, par imagerie paramétrique.

Le système de pilotage et d'acquisition 30 ; 30' peut d'ailleurs être configuré pour fusionner les données produites par traitement des signaux d'écho s_{E} paramétriques, avec les données produites par traitement des signaux d'écho additionnels précités. Cette fusion peut par exemple comprendre un recalage des profondeurs déduites des signaux d'écho s_{E} paramétriques, sur la base des profondeurs des points P1, P2, P3 du fond déduites, avec plus de précision, des signaux d'écho additionnels, conventionnels.

A titre d'exemple, dans le cas du premier mode de réalisation, lorsque l'orientation de l'axe de superposition z_{S} est modifiée en faisant varier l'orientation du deuxième plan d'émission Pl2, alors, à l'étape b'), l'échosondeur 1 acquiert plusieurs signaux d'écho additionnels, de fréquence égale à la deuxième fréquence f2 (éventuels décalages Doppler mis à part). Ces signaux d'écho additionnels sont captés par les différents transducteurs 11 de la première branche 13 de l'antenne, ces transducteurs 11 étant alors employés en réception. Comme cela est connu, l'ensemble des signaux d'écho additionnels acquis lors de cette exécution de l'étape b') permet de déterminer une image bidimensionnelle représentative du contenu de la fauchée W2, balayée par la deuxième onde acoustique émise à l'étape a) lors de sa propagation. Comme les étapes a) et b') sont répétées pour plusieurs orientations différentes du deuxième plan d'émission Pl2, l'image supplémentaire IM' finalement obtenue est une image sonar tridimensionnelle, représentative du contenu du milieu subaquatique 3 dans le volume d'observation balayé par le deuxième faisceau W2 lors de cet ensemble d'exécutions de l'étape a).

Enfin, le système de pilotage et d'acquisition 30 ; 30' peut être configuré pour, sur la base des signaux d'écho additionnels (signaux d'écho classiques, "non-paramétriques"), déterminer une donnée représentative de la constitution de la couche superficielle du sous-sol 40 du milieu subaquatique, située sous les points du fond P1, P2, P3 sondés par l'échosondeur. Cette couche superficielle du sous-sol est la partie supérieure du sous-sol, qui vient au contact de l'eau. La donnée en question indique notamment si la couche superficielle de ce sous-sol est constituée de sable, de galets, de roche fragmentée ou de sédiments meubles, ou si elle est constituée au contraire d'un socle rocheux d'un seul tenant ou d'une couche sédimentaire solidifiée dans son ensemble. En particulier, le système de pilotage et d'acquisition 30 ; 30' peut par exemple comprendre un module de classification du fond tel que celui compris dans le produit Seapix développé par la demanderesse. En utilisant une fauchée transversale, il est possible de mesurer un indice de rétrodiffusion du fond en fonction de l'angle de rasance. Ces paramètres sont directement liés à la nature du fond. Pour plus de détails, on pourra se reporter au document « Seafloor classification with a Multi-swath Multi-beam Echo Sounder » de Trung-Kien Nguyen, 2018. La méthode employée dans ce cas consiste à observer une série de zones fixes sur le fond, insonifiées par la fauchée longitudinale. Avec l'avancement du navire en ligne droite, ces zones sont observées avec un angle de vue différent à chaque phase d'imagerie du sondeur. En gardant en mémoire la brillance de chaque zone en fonction de l'angle d'observation, on conserve pour chacune d'entre elle un profil de rétrodiffusion du fond, ce qui est caractéristique du type de fond observé (roche, type de sable, vase, algues...).

Le système de pilotage et d'acquisition 30 ; 30' peut alors être configuré pour déterminer une vitesse de consigne pour le déplacement du navire 2, en fonction de ladite donnée. Cette vitesse de consigne est plus faible lorsque la donnée en question indique que la couche superficielle du sous-sol 40 est susceptible de contenir des objets enfouis, c'est à dire lorsque cette donnée indique que la couche superficielle du fond est constituée de sable, de galets, de roche fragmentée ou de sédiments meubles, que lorsque cette donnée indique que la couche superficielle du sous-sol 40 n'est pas susceptible de contenir des objets enfouis, c'est à dire lorsqu'elle est constituée d'un socle rocheux d'un seul tenant ou d'une couche sédimentaire solidifiée dans son ensemble. Cette vitesse de consigne est ensuite transmise à un système de pilotage du navire 2 qui ajuste la vitesse de déplacement du navire à cette valeur de consigne. Ces dispositions permettent de réduire le temps nécessaire pour explorer une surface donnée du fond du milieu subaquatique, en évitant de sonder de manière détaillée des parties du fond qui ne sont pas susceptibles de contenir des objets enfouis.

Différentes variantes peuvent être apportées à l'échosondeur et au procédé de caractérisation d'une partie du sous-sol du milieu subaquatique qui ont été présentés ci-dessus.

Tout d'abord, au lieu que la première onde acoustique soit émise par un premier groupe de transducteurs, tandis que la deuxième onde acoustique est émise par un deuxième groupe de transducteurs distinct du premier, on pourrait prévoir que chaque transducteur contribue à l'émission de ces deux ondes. Dans le cadre d'une telle variante, le système de pilotage et d'acquisition est configuré pour que les signaux d'émission, qui pilotent les transducteurs 11, 12, comprennent chacun une première composante et une deuxième composante variant respectivement au cours du temps avec la première fréquence f1 et avec la deuxième fréquence f2. Les transducteurs 11, 12 de l'antenne émettent alors, à l'étape a), une onde acoustique modulée, en l'occurrence modulée en amplitude, se propageant le long de l'axe de superposition z_{S}, composée de la première onde acoustique et de la deuxième onde acoustique. En d'autres termes, cette onde acoustique modulée se décompose en la première onde acoustique et la deuxième onde acoustique. Les signaux d'émission sont d'ailleurs eux aussi des signaux modulés en amplitude. Du point de vue de l'électronique de pilotage des transducteurs 11, 12, cette variante est plus contraignante à mettre en œuvre qu'une émission des première et deuxième ondes acoustiques par des transducteurs distincts, puisqu'il faut alors alimenter les transducteurs par des signaux oscillant, à haute tension, de forme plus complexe.

Par ailleurs, un agencement des transducteurs sur la surface de l'antenne différent de ce qui a été décrit plus haut pourrait être employé. A titre d'exemple, les transducteurs pourraient être répartis de manière à former ensemble une spirale, au lieu de former une croix ou une matrice.

Mais quoi qu'il en soit, les transducteurs de l'antenne ne sont pas tous répartis le long d'une même ligne. Comme déjà indiqué, leurs positions sont réparties de manière bidimensionnelle, sur toute une surface. Plus précisément, l'ensemble comprenant les différents transducteurs de l'antenne émettrice s'étend sur une surface qui présente, selon deux directions orthogonales, deux dimensions chacune supérieure à 20 centimètres, voire supérieure à 50 centimètres. Cela permet d'émettre les première et deuxième ondes acoustiques avec une bonne directivité, ce qui augmente leur puissance par unité de surface et augmente donc l'efficacité du processus non-linéaire de génération de l'onde acoustique basse fréquence. Cela permet de sonder le contenu du sous-sol 40 du milieu subaquatique avec une bonne résolution latérale.

## Revendications

1. Échosondeur (1 ; 1') paramétrique comprenant :
- une antenne (10 ; 10') émettrice comportant plusieurs transducteurs (11, 12),
- au moins un récepteur (20), et
- un système de pilotage et d'acquisition (30 ; 30') configuré pour exécuter les étapes suivantes :
a) piloter lesdits transducteurs (11, 12) pour qu'ils émettent dans un milieu subaquatique (3) une première onde acoustique ayant une première fréquence (f1) et une deuxième onde acoustique ayant une deuxième fréquence (f2), la première onde et la deuxième onde se superposant l'une à l'autre le long d'un axe de superposition (z_{S}) dirigé vers un point (P1, P2, P3) du fond (4) du milieu subaquatique (3), chaque transducteur (11, 12) étant piloté par un signal d'émission (s_{1,1}, s_{1,2}, s_{1,3}, s_{2,1}, s_{2,2}, s_{2,3}), les différents signaux d'émission des différents transducteurs (11, 12) présentant des retards (Δt_{1,1} , Δt_{1,2} , Δt_{1,3} , Δt_{2,1} , Δt_{2,2} , Δt_{2,3}) prédéterminés les uns par rapport aux autres, et
b) acquérir un signal d'écho (s_{E}), de fréquence égale à la différence entre ladite première fréquence (f1) et ladite deuxième fréquence (f2), capté par ledit récepteur (20) en réponse à l'émission réalisée à l'étape a),
le système de pilotage et d'acquisition (30 ; 30') étant configuré en outre pour exécuter l'ensemble des étapes a) et b) plusieurs fois, en faisant varier une partie au moins desdits retards (Δt_{1,1}, Δt_{1,2}, Δt_{1,3}, Δt_{2,1}, Δt_{2,2}, Δt_{2,3}) d'une exécution de l'étape a) à l'autre, de manière à modifier l'orientation dudit axe de superposition (z_{S}) d'une exécution de l'étape a) à l'autre, et pour :
c) déterminer, à partir des signaux d'écho (s_{E}) acquis lors des différentes exécutions de l'étape b), une image (IM) bidimensionnelle ou tridimensionnelle représentative du contenu du sous-sol (40) du milieu subaquatique (3) sous chacun desdits points (P1, P2, P3) du fond,
le système de pilotage et d'acquisition (30 ; 30') étant en outre configuré pour, à l'étape a) :
- piloter chaque transducteur (11) d'un premier groupe (13 ; 13') desdits transducteurs (11, 12) par un premier signal d'émission (s_{1,1}, s_{1,2}, s_{1,3}) variant au cours du temps à ladite première fréquence (f1), les transducteurs (11) de ce premier groupe émettant ladite première onde acoustique, les différents premiers signaux d'émission (s_{1,1}, s_{1,2}, s_{1,3}) présentant des premiers retards (Δt_{1,1}, Δt_{1,2}, Δt_{1,3}), prédéterminés, les uns par rapport aux autres,
- piloter chaque transducteur (12) d'un deuxième groupe (14 ; 14') desdits transducteurs (11, 12) par un deuxième signal d'émission (s_{2,1}, s_{2,2}, s_{2,3}) variant au cours du temps à ladite deuxième fréquence (f2), les transducteurs (12) de ce deuxième groupe émettant ladite deuxième onde acoustique, les différents deuxièmes signaux d'émission (s_{2,1}, s_{2,2}, s_{2,3}) présentant des deuxièmes retards (Δt_{2,1}, Δt_{2,2}, Δt_{2,3}), prédéterminés, les uns par rapport aux autres,
- et pour faire varier lesdits premiers retards (Δt_{1,1}, Δt_{1,2}, Δt_{1,3}) et/ou lesdits deuxièmes retards (Δt_{2,1}, Δt_{2,2}, Δt_{2,3}) d'une exécution de l'étape a) à l'autre, de manière à modifier l'orientation dudit axe de superposition (z_{S}) d'une exécution de l'étape a) à l'autre, l'échosondeur paramétrique étant **caractérisé en ce que**
lesdits transducteurs (11, 12) étant disposés de manière à former une matrice à plusieurs lignes et plusieurs colonnes, les transducteurs (11, 12) étant situés respectivement aux différentes intersections entre les lignes et colonnes de la matrice,
les premiers et deuxièmes retards (Δt_{1,1} , Δt_{1,2} , Δt_{1,3} , Δt_{2,1} , Δt_{2,2} , Δt_{2,3}) étant tels que les première et deuxième ondes acoustiques sont émises respectivement sous la forme d'un premier faisceau (W1') collimaté et d'un deuxième faisceau (W2') collimaté centrés chacun sur ledit axe de superposition (z_{S}),
les transducteurs (11) du premier groupe (13') occupant plusieurs zones distinctes de ladite matrice, un ou plusieurs des transducteurs (12) du deuxième groupe (14') étant intercalés entre deux quelconques desdites zones,
chaque transducteur (11) du premier groupe (13') ayant pour plus proches voisins des transducteurs (12) du deuxième groupe (14').

2. Échosondeur (1 ; 1') paramétrique selon la revendication 1, dans lequel certains desdits transducteurs (11, 12) comprennent chacun un élément en matériau piézo-électrique ainsi qu'un dispositif mécanique appliquant une contrainte de compression audit élément en matériau piézo-électrique, cette contrainte de compression étant supérieure à 7 bars.

3. Échosondeur paramétrique (1 ; 1') selon la revendication 1 ou 2, dans lequel :
- chaque transducteurs (11, 12) est apte à émettre des ondes acoustiques dans le milieu subaquatique (3) à des fréquences supérieures à 50 kilohertz,
- le récepteur (20) est apte à capter et convertir sous forme électrique des ondes acoustiques dont la fréquence est comprise dans une bande passante de réception, la bande passante de réception étant comprise entre 0 et 30 kilohertz, et dans lequel
- le système de pilotage et d'acquisition (30 ; 30') est configuré de sorte que les première et deuxième fréquences (f1, f2) soient chacune supérieure à 50 kilohertz, et de sorte la différence entre la première fréquence (f1) et la deuxième fréquences (f2) soit comprise dans ladite bande passante de réception et soit inférieure à 30 kilohertz.

4. Échosondeur (1 ; 1') paramétrique selon l'une des revendications 1 à 3, dans lequel le système de pilotage et d'acquisition (30 ; 30') est configuré pour faire varier la différence entre ladite première fréquence (f1) et ladite deuxième fréquence (f2), d'une exécution de l'étape a) à l'autre.

5. Échosondeur (1 ; 1') paramétrique selon l'une des revendications 1 à 4, dans lequel le système de pilotage et d'acquisition (30 ; 30') est configuré en outre pour :
- après chaque exécution de l'étape a), acquérir un signal d'écho additionnel, de fréquence égale à ladite première fréquence (f1) ou à ladite deuxième fréquence (f2), capté par l'un au moins desdits transducteurs (11, 12) en réponse à l'émission réalisée à l'étape a), et pour
- déterminer une image (IM') représentative d'une partie du milieu subaquatique (3) sur la base desdits signaux d'écho additionnels.

6. Échosondeur (1 ; 1') paramétrique selon l'une des revendications 1 à 5, dans lequel le système de pilotage et d'acquisition (30 ; 30') est configuré en outre pour, à l'étape a), piloter lesdits transducteurs (11, 12) de manière à ce qu'un angle d'incidence, formé entre ledit axe de superposition (z_{S}) et un axe (z4) perpendiculaire au fond (4) du milieu subaquatique, soit supérieur à un angle d'incidence limite.

7. Échosondeur (1 ; 1') paramétrique comprenant :
- une antenne (10 ; 10') émettrice comportant plusieurs transducteurs (11, 12), l'antenne (10) émettrice ayant une forme de croix à deux branches, certains desdits transducteurs (11) étant disposés en ligne les uns à la suite des autres le long de la première branche (13) de l'antenne (10), les autres transducteurs (12) de l'antenne étant disposés en ligne les uns à la suite des autres le long de la deuxième branche (14) de l'antenne (10).
- au moins un récepteur (20), et
- un système de pilotage et d'acquisition (30 ; 30') configuré pour exécuter les étapes suivantes :
a) piloter lesdits transducteurs (11, 12) pour qu'ils émettent dans un milieu subaquatique (3) une première onde acoustique ayant une première fréquence (f1) et une deuxième onde acoustique ayant une deuxième fréquence (f2), la première onde et la deuxième onde se superposant l'une à l'autre le long d'un axe de superposition (z_{S}) dirigé vers un point (P1, P2, P3) du fond (4) du milieu subaquatique (3), chaque transducteur (11, 12) étant piloté par un signal d'émission (s_{1,1}, s_{1,2}, s_{1,3}, s_{2,1}, s_{2,2}, s_{2,3}), les différents signaux d'émission des différents transducteurs (11, 12) présentant des retards (Δt_{1,1} , Δt_{1,2} , Δt_{1,3} , Δt_{2,1} , Δt_{2,2} , Δt_{2,3}) prédéterminés les uns par rapport aux autres, et
b) acquérir un signal d'écho (s_{E}), de fréquence égale à la différence entre ladite première fréquence (f1) et ladite deuxième fréquence (f2), capté par ledit récepteur (20) en réponse à l'émission réalisée à l'étape a),
le système de pilotage et d'acquisition (30 ; 30') étant configuré en outre pour exécuter l'ensemble des étapes a) et b) plusieurs fois, en faisant varier une partie au moins desdits retards (Δt_{1,1}, Δt_{1,2}, Δt_{1,3}, Δt_{2,1}, Δt_{2,2}, Δt_{2,3}) d'une exécution de l'étape a) à l'autre, de manière à modifier l'orientation dudit axe de superposition (z_{S}) d'une exécution de l'étape a) à l'autre, et pour :
c) déterminer, à partir des signaux d'écho (s_{E}) acquis lors des différentes exécutions de l'étape b), une image (IM) bidimensionnelle ou tridimensionnelle représentative du contenu du sous-sol (40) du milieu subaquatique (3) sous chacun desdits points (P1, P2, P3) du fond,
le système de pilotage et d'acquisition (30 ; 30') étant en outre configuré pour, à l'étape a) :
- piloter chaque transducteur (11) d'un premier groupe (13 ; 13') desdits transducteurs (11, 12) par un premier signal d'émission (s_{1,1}, s_{1,2}, s_{1,3}) variant au cours du temps à ladite première fréquence (f1), les transducteurs (11) de ce premier groupe émettant ladite première onde acoustique, les différents premiers signaux d'émission (s_{1,1}, s_{1,2}, s_{1,3}) présentant des premiers retards (Δt_{1,1}, Δt_{1,2}, Δt_{1,3}), prédéterminés, les uns par rapport aux autres,
- piloter chaque transducteur (12) d'un deuxième groupe (14 ; 14') desdits transducteurs (11, 12) par un deuxième signal d'émission (s_{2,1}, s_{2,2}, s_{2,3}) variant au cours du temps à ladite deuxième fréquence (f2), les transducteurs (12) de ce deuxième groupe émettant ladite deuxième onde acoustique, les différents deuxièmes signaux d'émission (s_{2,1}, s_{2,2}, s_{2,3}) présentant des deuxièmes retards (Δt_{2,1}, Δt_{2,2}, Δt_{2,3}), prédéterminés, les uns par rapport aux autres,
et pour faire varier lesdits premiers retards (Δt_{1,1}, Δt_{1,2}, Δt_{1,3}) et/ou lesdits deuxièmes retards (Δt_{2,1}, Δt_{2,2}, Δt_{2,3}) d'une exécution de l'étape a) à l'autre, de manière à modifier l'orientation dudit axe de superposition (z_{S}) d'une exécution de l'étape a) à l'autre,
dans lequel :
- les transducteurs (11) du premier groupe forment la première branche (13) de l'antenne (10) et les transducteurs (12) du deuxième groupe formant la deuxième branche (14) de l'antenne (10),
- lesdits premiers retards (Δt_{1,1}, Δt_{1,2}, Δt_{1,3}) sont tels que la première onde acoustique se propage parallèlement à un premier plan d'émission (PI1), sous la forme d'un premier faisceau (W1) ayant une section transverse étroite dans une direction perpendiculaire au premier plan d'émission (PI1), et allongée parallèlement au premier plan d'émission (PI1),
- lesdits deuxièmes retards (Δt_{2,1}, Δt_{2,2}, Δt_{2,3}) sont tels que la deuxième onde acoustique se propage parallèlement à un deuxième plan d'émission (Pl2), sous la forme d'un deuxième faisceau (W2) ayant une section transverse étroite dans une direction perpendiculaire au deuxième plan d'émission (PI2) et allongée parallèlement au deuxième plan d'émission (PI2),
ledit axe de superposition (z_{S}) étant situé à l'intersection entre le premier plan d'émission (Pl1) et le deuxième plan d'émission (PI2), et dans lequel
le système de pilotage (30) est configuré pour, d'une exécution de l'étape a) à l'autre :
- faire varier lesdits premiers retards (Δt_{1,1}, Δt_{1,2}, Δt_{1,3}) de manière à faire pivoter le premier plan d'émission (Pl1) autour d'un premier axe de balayage (y) perpendiculaire à la première branche (13) de l'antenne (10), et/ou
- faire varier lesdits deuxièmes retards (Δt_{2,1}, Δt_{2,2}, Δt_{2,3}) de manière à faire pivoter le deuxième plan d'émission (Pl2) autour d'un deuxième axe de balayage (x) perpendiculaire à la deuxième branche (14) de l'antenne (10).

8. Échosondeur (1 ; 1') paramétrique selon la revendication 7, dans lequel certains desdits transducteurs (11, 12) comprennent chacun un élément en matériau piézo-électrique ainsi qu'un dispositif mécanique appliquant une contrainte de compression audit élément en matériau piézo-électrique, cette contrainte de compression étant supérieure à 7 bars.

9. Échosondeur paramétrique (1 ; 1') selon la revendication 7 ou 8, dans lequel :
- chaque transducteurs (11, 12) est apte à émettre des ondes acoustiques dans le milieu subaquatique (3) à des fréquences supérieures à 50 kilohertz,
- le récepteur (20) est apte à capter et convertir sous forme électrique des ondes acoustiques dont la fréquence est comprise dans une bande passante de réception, la bande passante de réception étant comprise entre 0 et 30 kilohertz, et dans lequel
- le système de pilotage et d'acquisition (30 ; 30') est configuré de sorte que les première et deuxième fréquences (f1, f2) soient chacune supérieure à 50 kilohertz, et de sorte la différence entre la première fréquence (f1) et la deuxième fréquences (f2) soit comprise dans ladite bande passante de réception et soit inférieure à 30 kilohertz.

10. Échosondeur (1 ; 1') paramétrique selon l'une des revendications 7 à 9, dans lequel le système de pilotage et d'acquisition (30 ; 30') est configuré pour faire varier la différence entre ladite première fréquence (f1) et ladite deuxième fréquence (f2), d'une exécution de l'étape a) à l'autre.

11. Échosondeur (1 ; 1') paramétrique selon l'une des revendications 7 à 10, dans lequel le système de pilotage et d'acquisition (30 ; 30') est configuré en outre pour :
- après chaque exécution de l'étape a), acquérir un signal d'écho additionnel, de fréquence égale à ladite première fréquence (f1) ou à ladite deuxième fréquence (f2), capté par l'un au moins desdits transducteurs (11, 12) en réponse à l'émission réalisée à l'étape a), et pour
- déterminer une image (IM') représentative d'une partie du milieu subaquatique (3) sur la base desdits signaux d'écho additionnels.

12. Échosondeur (1 ; 1') paramétrique selon l'une des revendications 7 à 11, dans lequel le système de pilotage et d'acquisition (30 ; 30') est configuré en outre pour, à l'étape a), piloter lesdits transducteurs (11, 12) de manière à ce qu'un angle d'incidence, formé entre ledit axe de superposition (z_{S}) et un axe (z4) perpendiculaire au fond (4) du milieu subaquatique, soit supérieur à un angle d'incidence limite.

13. Procédé de caractérisation d'une partie du sous-sol (40) d'un milieu subaquatique (3), mis en œuvre au moyen d'un échosondeur (1 ; 1') paramétrique selon l'une quelconque des revendications 1 à 11,
le procédé comprenant les étapes suivantes, exécutées par le système de pilotage et d'acquisition (30 ; 30') :
a) piloter lesdits transducteurs (11, 12) pour qu'ils émettent dans un milieu subaquatique (3) une première onde acoustique ayant une première fréquence (f1) et une deuxième onde acoustique ayant une deuxième fréquence (f2), la première onde et la deuxième onde se superposant l'une à l'autre le long d'un axe de superposition (z_{S}) dirigé vers un point (P1, P2, P3) du fond (4) du milieu subaquatique, chaque transducteur (11, 12) étant piloté par un signal d'émission (s_{1,1}, s_{1,2}, s_{1,3}, s_{2,1}, s_{2,2}, s_{2,3}), les différents signaux d'émission des différents transducteurs (11, 12) présentant des retards prédéterminés (Δt_{1,1} , Δt_{1,2} , Δt_{1,3} , Δt_{2,1} , Δt_{2,2} , Δt_{2,3}) les uns par rapport aux autres, et
b) acquérir un signal d'écho (s_{E}), de fréquence égale à la différence entre ladite première fréquence (f1) et ladite deuxième fréquence (f2), capté par ledit récepteur (20) en réponse à l'émission réalisée à l'étape a),
l'ensemble des étapes a) et b) étant exécuté plusieurs fois, en faisant varier une partie au moins desdits retards (Δt_{1,1}, Δt_{1,2}, Δt_{1,3}, Δt_{2,1}, Δt_{2,2}, Δt_{2,3}) d'une exécution de l'étape a) à l'autre, de manière à modifier l'orientation dudit axe de superposition (z_{S}) d'une exécution de l'étape a) à l'autre, le procédé comprenant en outre l'étape suivante :
c) déterminer, à partir des signaux d'écho (s_{E}) acquis lors des différentes exécutions de l'étape b), une image (IM) bidimensionnelle ou tridimensionnelle représentative du contenu du sous-sol (40) du milieu subaquatique (3) sous chacun desdits points (P1, P2, P3) du fond.

## Patentansprüche

1. Parametrisches Echolot (1 ; 1') mit:
- einer Sendeantenne (10; 10') mit mehreren Wandlern (11, 12),
- mindestens einem Empfänger (20) und
- einem Steuerungs- und Erfassungssystem (30 ; 30'), das dazu ausgebildet ist, die folgenden Schritte auszuführen:
a) Ansteuern der Wandler (11, 12), damit sie in einer Unterwasserumgebung (3) eine erste Schallwelle mit einer ersten Frequenz (f1) und eine zweite Schallwelle mit einer zweiten Frequenz (f2) aussenden, wobei sich die erste Welle und die zweite Welle entlang einer Überlagerungsachse (z_{S}) überlagern, die auf einen Punkt (P1, P2, P3) des Bodens (4) der Unterwasserumgebung (3) gerichtet ist, wobei jeder Wandler (11, 12) durch ein Sendesignal (s_{1,1}, s_{1,2}, s_{1,3}, s_{2,1}, s_{2,2}, s_{2,3}) gesteuert wird, wobei die verschiedenen Sendesignale der verschiedenen Wandler (11, 12) gegenseitig vorbestimmte Verzögerungen (Δt_{1,1}, Δt_{1,2}, Δt_{1,3}, Δt_{2,1}, Δt_{2,2}, Δt_{2,3}) aufweisen, und
b) Erfassen eines Echosignals (s_{E}) mit einer Frequenz, die gleich der Differenz zwischen der ersten Frequenz (f1) und der zweiten Frequenz (f2) ist und vom Empfänger (20) als Antwort auf die im Schritt a) erfolgte Sendung empfangen wird,
wobei das Steuerungs- und Erfassungssystem (30 ; 30') außerdem dazu ausgebildet ist, die Gesamtheit der Schritte a) und b) mehrere Male auszuführen und dabei mindestens einen Teil der besagten Verzögerungen (Δt_{1,1}, Δt_{1,2}, Δt_{1,3}, Δt_{2,1}, Δt_{2,2}, Δt_{2,3}) von einer Ausführung des Schritts a) zur anderen zu ändern, um die Ausrichtung der besagten Überlagerungsachse (z_{S}) von einer Ausführung des Schritts a) zur anderen zu ändern und um :
c) von den bei den verschiedenen Ausführungen des Schritts b) erfaßten Echosignalen (s_{E}) ausgehend, ein zweidimensionales oder dreidimensionales Bild (IM) zu bestimmen, das den Inhalt des Untergrunds (40) der Unterwasserumgebung (3) unter jedem der Punkte (P1, P2, P3) des Bodens darstellt,
wobei das Steuerungs- und Erfassungssystem (30 ; 30') ferner dazu ausgelegt ist, beim Schritt a):
- jeden Wandler (11) einer ersten Gruppe (13 ; 13') der Wandler (11, 12) durch ein erstes Sendesignal (s_{1,1}, s_{1,2}, s_{1,3}) zu steuern, das im Verlauf der Zeit bei der ersten Frequenz (f1) variiert, wobei die Wandler (11) dieser ersten Gruppe die erste akustische Welle ausstrahlen, wobei die verschiedenen ersten Sendesignale (s_{1,1}, s_{1,2}, s_{1,3}) erste relativ zueinander vorbestimmte Verzögerungen (Δt_{1,1}, Δt_{1,2}, Δt_{1,3})
aufweisen,
- jeden Wandler (12) einer zweiten Gruppe (14 ; 14') der Wandler (11, 12) durch ein zweites Sendesignal (s_{2,1}, s_{2,2}, s_{2,3}) zu steuern, das im Verlauf der Zeit bei der zweiten Frequenz (f2) variiert, wobei die Wandler (12) dieser zweiten Gruppe die zweite akustische Welle ausstrahlen, wobei die verschiedenen zweiten Sendesignale (s_{2,1}, s_{2,2}, s_{2,3}) zweite relativ zueinander vorbestimmte Verzögerungen (Δt_{2,1}, Δt_{2,2}, Δt_{2,3}) aufweisen,
- und die besagten ersten Verzögerungen (Δt_{1,1}, Δt_{1,2}, Δt_{1,3}) und/oder die besagten zweiten Verzögerungen (Δt_{2,1}, Δt_{2,2}, Δt_{2,3}) von einer Ausführung des Schritts a) zur anderen variieren zu lassen, um die Ausrichtung der Überlagerungsachse (z_{S}) von einer Ausführung des Schritts a) zur anderen zu ändern, wobei das parametrische Echolot **dadurch gekennzeichnet ist, daß** die Wandler (11, 12) so angeordnet sind, daß sie eine Matrix mit mehreren Linien und mehreren Spalten bilden, wobei die Wandler (11, 12) jeweils an den verschiedenen Schnittpunkten zwischen den Zeilen und Spalten der Matrix angeordnet sind,
wobei die ersten und die zweiten Verzögerungen (Δt_{1,1}, Δt_{1,2}, Δt_{1,3}, Δt_{2,1}, Δt_{2,2}, Δt_{2,3}) so sind, daß die ersten und die zweiten akustischen Wellen in Form eines ersten kollimierten Strahls (W1') und eines zweiten kollimierten Strahls (W2') jeweils zur besagten Überlagerungsachse (z_{S}) zentrisch sind,
wobei die Wandler (11) der ersten Gruppe (13') mehrere getrennte Bereiche dieser Matrix einnehmen, wobei einer oder mehrere Wandler (12) der zweiten Gruppe (14') zwischen zwei beliebigen dieser Zonen angeordnet sind,
wobei jeder Wandler (11) der ersten Gruppe (13') als nächste Nachbarn Wandler (12) der zweiten Gruppe (14') haben.

2. Parametrisches Echolot (1 ; 1') gemäß Anspruch 1, bei dem gewisse der Wandler (11, 12) jeweils ein Element aus piezoelektrischem Material sowie eine mechanische Vorrichtung aufweisen, die auf das Element aus piezoelektrischem Material eine Druckspannung ausübt, wobei diese Druckspannung geöißer als 7 bar ist.

3. Parametrisches Echolot (1 ; 1') gemäß Anspruch 1 oder 2, bei dem :
- jeder Wandler (11, 12) in der Lage ist, akustische Wellen mit höheren Frequenzen als 50 Kilohertz in die Unterwasserumgebung (3) auszustrahlen,
- der Empfänger (20) in der Lage ist, akustische Wellen zu erfassen und in eine elektrische Form umzuwandeln, deren Frequenz in einer Empfangsbandbreite liegt, wobei die Empfangsbandbreite zwischen 0 und 30 Kilohertz liegt, und
- das Steuerungs- und Erfassungssystem (30; 30') so ausgelegt ist, daß die erste und die zweite Frequenz (f1, f2) jeweils größer als 50 Kilohertz sind, und so, daß die Differenz zwischen der ersten Frequenz (f1) und der zweiten Frequenz (f2) in der Empfangsbandbreite liegt und weniger als 30 Kilohertz beträgt.

4. Parametrisches Echolot (1 ; 1') gemäß einem der Ansprüche 1 bis 3, bei dem das Steuerungs- und Erfassungssystem (30; 30') dazu ausgelegt ist, die Differenz zwischen der ersten Frequenz (f1) und der zweiten Frequenz (f2) von einer Ausführung des Schritts a) zur anderen zu variieren.

5. Parametrisches Echolot (1 ; 1') gemäß einem der Ansprüche 1 bis 4, bei dem das Steuerungs- und Erfassungssystem (30; 30') außerdem dazu ausgelegt ist,
- nach jeder Ausführung des Schritts a) ein zusätzliches Echosignal mit einer Frequenz gleich der ersten Frequenz (f1) oder der zweiten Frequenz (f2) zu erfassen, das von mindestens einem der besagten Wandler (11, 12) als Reaktion auf die in Schritt a) erfolgte Aussendung eingefangen wird, und
- auf der Grundlage der zusätzlichen Echosignale ein Bild (IM') zu bestimmen, das für einen Teil der Unterwasserumgebung (3) repräsentativ ist.

6. Parametrisches Echolot (1 ; 1') gemäß einem der Ansprüche 1 bis 5, bei dem das Steuerungs- und Erfassungssystem (30; 30') außerdem dazu ausgelegt ist, beim Schritt a) die Wandler (11, 12) so zu steuern, daß ein zwischen der Überlagerungsachse (z_{S}) und einer zum Boden (4) der Unterwasserumgebung senkrecht stehenden Achse (z4) gebildeter Einfallswinkel größer als ein Grenzeinfallswinkel ist.

7. Parametrisches Echolot (1 ; 1') mit :
- einer mehrere Wandler (11, 12) aufweisenden Sendeantenne (10; 10'), wobei die Sendeantenne (10) die Form eines zweiarmigen Kreuzes hat, wobei einige der Wandler (11) nacheinander in Reihe entlang des ersten Zweiges (13) der Antenne (10) angeordnet sind und die anderen Wandler (12) der Antenne nacheinander in Reihe entlang des zweiten Zweiges (14) der Antenne (10) angeordnet sind,
- mindestens einem Empfänger (20) und
- einem Steuerungs- und Erfassungssystem (30; 30'), das dazu ausgelegt ist, die folgenden Schritte auszuführen :
a) Ansteuern der Wandler (11, 12), damit diese in einer Unterwasserumgebung (3) eine erste Schallwelle mit einer ersten Frequenz (f1) und eine zweite Schallwelle mit einer zweiten Frequenz (f2) aussenden, wobei sich die erste Welle und die zweite Welle entlang einer Überlagerungsachse (z_{S}) überlagern, die auf einen Punkt (P1, P2, P3) des Bodens (4) der Unterwasserumgebung (3) gerichtet ist, wobei jeder Wandler (11, 12) durch ein Sendesignal (s_{1,1}, s_{1,2}, s_{1,3}, s_{2,1}, s_{2,2}, s_{2,3}) gesteuert wird, wobei die verschiedenen Sendesignale der verschiedenen Wandler (11, 12) gegenseitig vorbestimmte Verzögerungen (Δt_{1,1}, Δt_{1,2}, Δt_{1,3}, Δt_{2,1}, Δt_{2,2}, Δt_{2,3}) aufweisen, und
b) Erfassen eines Echosignals (s_{E}) mit einer Frequenz, die gleich der Differenz zwischen der ersten Frequenz (f1) und der zweiten Frequenz (f2) ist und vom Empfänger (20) als Antwort auf die im Schritt a) erfolgte Sendung empfangen wird,
wobei das Steuerungs- und Erfassungssystem (30 ; 30') außerdem dazu ausgebildet ist, die Gesamtheit der Schritte a) und b) mehrere Male auszuführen und dabei mindestens einen Teil der besagten Verzögerungen (Δt_{1,1}, Δt_{1,2}, Δt_{1,3}, Δt_{2,1}, Δt_{2,2}, Δt_{2,3}) von einer Ausführung des Schritts a) zur anderen zu ändern, um die Ausrichtung der besagten Überlagerungsachse (z_{S}) von einer Ausführung des Schritts a) zur anderen zu ändern und um :
c) von den bei den verschiedenen Ausführungen des Schritts b) erfaßten Echosignalen (s_{E}) ausgehend, ein zweidimensionales oder dreidimensionales Bild (IM) zu bestimmen, das den Inhalt des Untergrunds (40) der Unterwasserumgebung (3) unter jedem der Punkte (P1, P2, P3) des Bodens darstellt,
wobei das Steuerungs- und Erfassungssystem (30 ; 30') ferner dazu ausgelegt ist, beim Schritt a):
- jeden Wandler (11) einer ersten Gruppe (13 ; 13') der Wandler (11, 12) durch ein erstes Sendesignal (s_{1,1}, s_{1,2}, s_{1,3}) zu steuern, das im Verlauf der Zeit bei der ersten Frequenz (f1) variiert, wobei die Wandler (11) dieser ersten Gruppe die erste akustische Welle ausstrahlen, wobei die verschiedenen ersten Sendesignale (s_{1,1}, s_{1,2}, s_{1,3}) erste relativ zueinander vorbestimmte Verzögerungen (Δt_{1,1}, Δt_{1,2}, Δt_{1,3}) aufweisen,
- jeden Wandler (12) einer zweiten Gruppe (14 ; 14') der Wandler (11, 12) durch ein zweites Sendesignal (s_{2,1}, s_{2,2}, s_{2,3}) zu steuern, das im Verlauf der Zeit bei der zweiten Frequenz (f2) variiert, wobei die Wandler (12) dieser zweiten Gruppe die zweite akustische Welle ausstrahlen, wobei die verschiedenen zweiten Sendesignale (s_{2,1}, s_{2,2}, s_{2,3}) zweite relativ zueinander vorbestimmte Verzögerungen (Δt_{2,1}, Δt_{2,2}, Δt_{2,3}) aufweisen,
und um die besagten ersten Verzögerungen (Δt_{1,1}, Δt_{1,2}, Δt_{1,3}) und/oder die besagten zweiten Verzögerungen (Δt_{2,1}, Δt_{2,2}, Δt_{2,3}) von einer Ausführung des Schritts a) zur anderen variieren zu lassen, um die Ausrichtung der Überlagerungsachse (z_{S}) von einer Ausführung des Schritts a) zur anderen zu ändern,
wobei :
- die Wandler (11) der ersten Gruppe den ersten Zweig (13) der Antenne (10) bilden und die Wandler (12) der zweiten Gruppe den zweiten Zweig (14) der Antenne (10) bilden,
- die genannten ersten Verzögerungen (Δt_{1,1}, Δt_{1,2}, Δt_{1,3}) so sind, daß sich die erste Schallwelle parallel zu einer ersten Emissionsebene (Pl1) in Form eines ersten Strahls (W1) ausbreitet, der einen schmalen Querschnitt in einer Richtung senkrecht zur ersten Emissionsebene (Pl1) aufweist und zur ersten Emissionsebene (Pl1) parallel längsgerichtet ist,
- die genannten zweiten Verzögerungen (Δt_{2,1}, Δt_{2,2}, Δt_{2,3}) so sind, daß sich die zweite Schallwelle parallel zu einer zweiten Emissionsebene (Pl2) in Form eines zweiten Strahls (W2) ausbreitet, der einen schmalen Querschnitt in einer Richtung senkrecht zur zweiten Emissionsebene (Pl2) aufweist und zur zweiten Emissionsebene (Pl2) parallel längsgerichtet ist,
wobei die Überlagerungsachse (z_{S}) am Schnittpunkt zwischen der ersten Emissionsebene (Pl1) und der zweiten Emissionsebene (Pl2) gelegen ist und wobei
das Steuerungssystem (30) dazu ausgelegt ist, von einer Ausführung des Schritts a) zur anderen :
- die genannten ersten Verzögerungen (Δt_{1,1}, Δt_{1,2}, Δt_{1,3}) so zu variieren, daß die erste Emissionsebene (PI1) um eine zum ersten Zweig (13) der Antenne (10) senkrechte erste Schwenksachse (y) geschwenkt wird, und/oder
- die genannten zweiten Verzögerungen (Δt_{2,1}, Δt_{2,2}, Δt_{2,3}) so zu variieren, daß die zweite Emissionsebene (Pl2) um eine zum zweiten Zweig (14) der Antenne (10) senkrechte zweite Schwenksachse (x) geschwenkt wird.

8. Parametrisches Echolot (1 ; 1') gemäß Anspruch 7, bei dem einige der genannten Wandler (11, 12) jeweils ein Element aus piezoelektrischem Material sowie eine mechanische Vorrichtung aufweisen, die auf das Element aus piezoelektrischem Material eine Druckspannung ausübt, wobei die Druckspannung größer als 7 bar ist.

9. Parametrisches Echolot (1 ; 1') gemäß Anspruch 7 oder 8, bei dem :
- jeder Wandler (11, 12) in der Lage ist, akustische Wellen mit Frequenzen von mehr als 50 Kilohertz in der Unterwasserumgebung (3) auszusenden,
- der Empfänger (20) in der Lage ist, akustische Wellen zu empfangen und in eine elektrische Form umzuwandeln, deren Frequenz in einer Empfangsbandbreite liegt, wobei die Empfangsbandbreite zwischen 0 und 30 Kilohertz liegt, und bei dem
- das Steuerungs- und Erfassungssystem (30; 30') so ausgelegt ist, daß die erste und die zweite Frequenz (f1, f2) jeweils größer als 50 Kilohertz ist, und so, daß die Differenz zwischen der ersten Frequenz (f1) und der zweiten Frequenz (f2) in der Empfangsbandbreite liegt und weniger als 30 Kilohertz beträgt.

10. Parametrisches Echolot (1 ; 1') gemäß einem der Ansprüche 7 bis 9, bei dem das Steuerungs- und Erfassungssystem (30; 30') dazu ausgelegt ist, die Differenz zwischen der ersten Frequenz (f1) und der zweiten Frequenz (f2) von einer Ausführung des Schritts a) zur anderen zu variieren.

11. Parametrisches Echolot (1 ; 1') gemäß einem der Ansprüche 7 bis 10, bei dem das Steuerungs- und Erfassungssystem (30; 30') außerdem dazu ausgelegt ist :
- nach jeder Ausführung des Schritts a) ein zusätzliches Echosignal mit einer Frequenz gleich der ersten Frequenz (f1) oder der zweiten Frequenz (f2) zu erfassen, das von mindestens einem der besagten Wandler (11, 12) als Reaktion auf die beim Schritt a) erfolgte Aussendung empfangen worden ist, und um
- auf der Grundlage der empfangenen zusätzlichen Echosignale ein Bild (IM') zu bestimmen, das für einen Teil der Unterwasserumgebung repräsentativ ist.

12. Parametrisches Echolot (1 ; 1') gemäß einem Ansprüche 7 bis 11, bei dem das Steuerungs- und Erfassungssystem (30; 30') außerdem dazu ausgelegt ist, beim Schritt a) die Wandler (11, 12) so anzusteuern, daß ein Einfallswinkel, der zwischen der Überlagerungsachse (z_{S}) und einer zum Boden (4) der Unterwasserumgebung senkrecht verlaufenden Achse (z4) gebildet wird, größer als ein Grenzeinfallswinkel ist.

13. Verfahren zur Charakterisierung eines Teils des Untergrunds (40) einer Unterwasserumgebung (3), das mittels eines parametrischen Echolots (1 ; 1') gemäß einem der Ansprüche 1 bis 11 ausgeführt wird,
wobei das Verfahren die folgenden durch das Steuerungs- und Erfassungssystem (30 ; 30') ausgeführten Schritte aufweist :
a) Ansteuern der Wandler (11, 12) damit sie in einer Unterwasserumgebung (3) eine erste Schallwelle mit einer ersten Frequenz (f1) und eine zweite Schallwelle mit einer zweiten Frequenz (f2) aussenden, wobei sich die erste Welle und die zweite Welle entlang einer Überlagerungsachse (z_{S}) überlagern, die auf einen Punkt (P1, P2, P3) des Bodens (4) der Unterwasserumgebung (3) gerichtet ist, wobei jeder Wandler (11, 12) durch ein Sendesignal (s_{1,1}, s_{1,2}, s_{1,3}, s_{2,1}, s_{2,2}, s_{2,3}) gesteuert wird, wobei die verschiedenen Sendesignale der verschiedenen Wandler (11, 12) gegenseitig vorbestimmte Verzögerungen (Δt_{1,1}, Δt_{1,2}, Δt_{1,3}, Δt_{2,1}, Δt_{2,2}, Δt_{2,3}) aufweisen, und
b) Erfassen eines Echosignals (s_{E}) mit einer Frequenz, die gleich der Differenz zwischen der ersten Frequenz (f1) und der zweiten Frequenz (f2) ist und vom Empfänger (20) als Antwort auf die im Schritt a) erfolgte Sendung empfangen wird,
wobei die Gesamtheit der Schritte a) und b) mehrere Male ausgeführt wird und dabei mindestens ein Teil der besagten Verzögerungen (Δt_{1,1}, Δt_{1,2}, Δt_{1,3}, Δt_{2,1}, Δt_{2,2}, Δt_{2,3}) von einer Ausführung des Schritts a) zur anderen geändert wird, um die Ausrichtung der besagten Überlagerungsachse (z_{S}) von einer Ausführung des Schritts a) zur anderen zu ändern, wobei das Verfahren außerdem den folgenden Schritt aufweist :
c) von den bei den verschiedenen Ausführungen des Schritts b) erfaßten Echosignalen (s_{E}) ausgehend, ein zweidimensionales oder dreidimensionales Bild (IM) zu bestimmen, das den Inhalt des Untergrunds (40) der Unterwasserumgebung (3) unter jedem der Punkte (P1, P2, P3) des Bodens darstellt.

## Claims

1. A parametric echosounder (1; 1') comprising:
- a transmitting antenna (10; 10') comprising several transducers (11, 12),
- at least one receiver (20), and
- a driving and acquisition system (30; 30') configured to execute the following steps:
a) driving said transducers (11, 12) so that they transmit in an underwater environment (3) a first acoustic wave having a first frequency (f1) and a second acoustic wave having a second frequency (f2), the first wave and the second wave superposing each other along a superposition axis (z_{S}) directed towards a point (P1, P2, P3) of the bottom (4) of the underwater environment (3), each transducer (11, 12) being driven by a transmit signal (s_{1,1}, s_{1,2}, s_{1,3}, s_{2,1}, s_{2,2}, s_{2,3}), the different transmit signals of the different transducers (11, 12) having predetermined delays (Δt_{1,1} , Δt_{1,2} , Δt_{1,3} , Δt_{2,1} , Δt_{2,2} , Δt_{2,3}) with respect to each other, and
b) acquiring an echo signal (s_{E}), of frequency equal to the difference between said first frequency (f1) and said second frequency (f2), picked up by said receiver (20) in response to the transmission made at step a),
the driving and acquisition system (30; 30') being moreover configured to execute all steps a) and b) several times, by varying a part at least of said delays (Δt_{1,1}, Δt_{1,2}, Δt_{1,3}, Δt_{2,1}, Δt_{2,2}, Δt_{2,3}) from one execution of step a) to the next, in such a way as to modify the orientation of said superposition axis (z_{S}) from one execution of step a) to the next, and to
c) determine, based on the echo signals (s_{E}) acquired during the different executions of step b), a two-dimensional or three-dimensional image (IM) representative of the content of the sub-bottom (40) of the underwater environment (3) below each of said points (P1, P2, P3) of the bottom,
the driving and acquisition system (30; 30') being moreover configured to, at step a):
- drive each transducer (11) of a first group (13; 13') of said transducers (11, 12) by a first transmit signal (s_{1,1}, s_{1,2}, s_{1,3}) varying over time at said first frequency (f1), the transducers (11) of this first group transmitting said first acoustic wave, the different first transmit signals (s_{1,1}, s_{1,2}, s_{1,3}) having first delays (Δt_{1,1}, Δt_{1,2}, Δt_{1,3}), predetermined with respect to each other,
- drive each transducer (12) of a second group (14; 14') of said transducers (11, 12) by a second transmit signal (s_{2,1}, s_{2,2}, s_{2,3}) varying over time at said second frequency (f2), the transducers (12) of this second group transmitting said second acoustic wave, the different second transmit signals (s_{2,1}, s_{2,2}, s_{2,3}) having second delays (Δt_{2,1}, Δt_{2,2}, Δt_{2,3}), predetermined with respect to each other,
- and vary said first delays (Δt_{1,1}, Δt_{1,2}, Δt_{1,3}) and/or said second delays (Δt_{2,1}, Δt_{2,2}, Δt_{2,3}) from one execution of step a) to the next, in such a way as to modify the orientation of said superposition axis (z_{S}) from one execution of step a) to the next, the parametric echosounder being **characterized in that**
said transducers (11, 12) being arranged in such a way as to form a matrix of several lines and several columns, the transducers (11, 12) being respectively located at the different intersections between lines and columns of the matrix,
the first and second delays (Δt_{1,1}, Δt_{1,2}, Δt_{1,3}, Δt_{2,1}, Δt_{2,2}, Δt_{2,3}) being such that the first and second acoustic waves are transmitted as a first collimated beam (W1') and a second collimated beam (W2'), respectively, each centred to said superposition axis (z_{S}),
the transducers (11) of the first group (13') occupying several distinct areas of said matrix, one or several of the transducers (12) of the second group (14') being interposed between any two of said areas,
each transducer (11) of the first group (13') having for nearest neighbours transducers (12) of the second group (14').

2. The parametric echosounder (1; 1') according to claim 1, wherein certain of said transducers (11, 12) each comprise an element made of a piezoelectric material as well as a mechanical device applying a compressive stress to said piezoelectric material element, said compressive stress being higher than 7 bars.

3. The parametric echosounder (1; 1') according to claim 1 or 2, wherein:
- each transducer (11, 12) is adapted to transmit acoustic waves in the underwater environment (3) at frequencies higher than 50 kilohertz,
- the receiver (20) is adapted to pick up and convert into electric form acoustic waves whose frequency is comprised between a reception bandwidth, the reception bandwidth being between 0 and 30 kilohertz, and wherein
- the driving and acquisition system (30; 30') is configured in such a way that the first and second frequencies (f1, f2) are each higher than 50 kilohertz, and in such a way that the difference between the first frequency (f1) and the second frequency (f2) is comprised in said reception bandwidth and lower than 30 kilohertz.

4. The parametric echosounder (1; 1') according to one of claims 1 to 3, wherein the driving and acquisition system (30; 30') is configured to vary the difference between said first frequency (f1) and said second frequency (f2), from one execution of step a) to the next.

5. The parametric echosounder (1; 1') according to one of claims 1 to 4, wherein the driving and acquisition system (30; 30') is moreover configured to:
after each execution of step a), acquire an additional echo signal, of frequency equal to said first frequency (f1) or to said second frequency (f2), picked up by one at least of said transducers (11, 12) in response to the transmission made at step a), and to
- determine an image (IM') representative of a portion of the underwater environment (3) on the basis of said additional echo signals.

6. The parametric echosounder (1; 1') according to one of claims 1 to 5, wherein the driving and acquisition system (30; 30') is moreover configured to, at step a), drive said transducers (11, 12) in such a way that an incidence angle, formed between said superposition axis (z_{S}) and an axis (z4) perpendicular to the underwater environment bottom (4), is greater than a limit incidence angle.

7. A parametric echosounder (1; 1') comprising:
- a transmitting antenna (10; 10') comprising several transducers (11, 12), the transmitting antenna (10) having a two-arm cross shape, certain of said transducers (11) being arranged in a line one after the other along the first arm (13) of the antenna (10), the other transducers (12) of the antenna being arranged in a line one after the other along the second arm (14) of the antenna (10),
- at least one receiver (20), and
- a driving and acquisition system (30; 30') configured to execute the following steps:
a) driving said transducers (11, 12) so that they transmit in an underwater environment (3) a first acoustic wave having a first frequency (f1) and a second acoustic wave having a second frequency (f2), the first wave and the second wave superposing each other along a superposition axis (z_{S}) directed towards a point (P1, P2, P3) of the bottom (4) of the underwater environment (3), each transducer (11, 12) being driven by a transmit signal (s_{1,1}, s_{1,2}, s_{1,3}, s_{2,1}, s_{2,2}, s_{2,3}), the different transmit signals of the different transducers (11, 12) having predetermined delays (Δt_{1,1}, Δt_{1,2}, Δt_{1,3}, Δt_{2,1}, Δt_{2,2}, Δt_{2,3}) with respect to each other, and
b) acquiring an echo signal (s_{E}), of frequency equal to the difference between said first frequency (f1) and said second frequency (f2), picked up by said receiver (20) in response to the transmission made at step a),
the driving and acquisition system (30; 30') being moreover configured to execute all steps a) and b) several times, by varying a part at least of said delays (Δt_{1,1}, Δt_{1,2}, Δt_{1,3}, Δt_{2,1}, Δt_{2,2}, Δt_{2,3}) from one execution of step a) to the next, in such a way as to modify the orientation of said superposition axis (z_{S}) from one execution of step a) to the next, and to
c) determine, based on the echo signals (s_{E}) acquired during the different executions of step b), a two-dimensional or three-dimensional image (IM) representative of the content of the sub-bottom (40) of the underwater environment (3) below each of said points (P1, P2, P3) of the bottom,
the driving and acquisition system (30; 30') being further configured to, at step a):
- drive each transducer (11) of a first group (13; 13') of said transducers (11, 12) by a first transmit signal (s_{1,1}, s_{1,2}, s_{1,3}) varying over time at said first frequency (f1), the transducers (11) of this first group transmitting said first acoustic wave, the different first transmit signals (s_{1,1}, s_{1,2}, s_{1,3}) having first delays (Δt_{1,1}, Δt_{1,2}, Δt_{1,3}), predetermined with respect to each other,
- drive each transducer (12) of a second group (14; 14') of said transducers (11, 12) by a second transmit signal (s_{2,1}, s_{2,2}, s_{2,3}) varying over time at said second frequency (f2), the transducers (12) of this second group transmitting said second acoustic wave, the different second transmit signals (s_{2,1}, s_{2,2}, s_{2,3}) having second delays (Δt_{2,1}, Δt_{2,2}, Δt_{2,3}), predetermined with respect to each other,
and vary said first delays (Δt_{1,1}, Δt_{1,2}, Δt_{1,3}) and/or said second delays (Δt_{2,1}, Δt_{2,2}, Δt_{2,3}) from one execution of step a) to the next, in such a way as to modify the orientation of said superposition axis (z_{S}) from one execution of step a) to the next,
wherein:
- the transducers (11) of the first group form the first arm (13) of the antenna (10) and the transducers (12) of the second group form the second arm (14) of the antenna (10),
- said first delays (Δt_{1,1}, Δt_{1,2}, Δt_{1,3}) are such that the first acoustic wave propagates parallel to a first transmission plane (PI1), as a first beam (W1) having a narrow cross-section in a direction perpendicular to the first transmission plane (PI1) and elongated parallel to the first transmission plane (PI1),
- said second delays (Δt_{2,1}, Δt_{2,2}, Δt_{2,3}) being such that the second acoustic wave propagates parallel to a second transmission plane (PI2), as a second beam (W2) having a narrow cross-section along a direction perpendicular to the second transmission plane (PI2) and elongated parallel to the second transmission plane (PI2),
said superposition axis (z_{S}) being located at the intersection between the first transmission plane (PI1) and the second transmission plane (PI2), and wherein
the driving system (30) is configured to, from one execution of step a) to the next:
- vary said first delays (Δt_{1,1}, Δt_{1,2}, Δt_{1,3}) in order to pivot the first transmission plane (PI1) about a first scanning axis (y) perpendicular to the first arm (13) of the antenna (10), and/or
- vary said second delays (Δt_{2,1}, Δt_{2,2}, Δt_{2,3}) in order to pivot the second transmission plane (PI2) about a second scanning axis (x) perpendicular to the second arm (14) of the antenna (10).

8. The parametric echosounder (1; 1') according to claim 7, wherein certain of said transducers (11, 12) each comprises an element made of a piezoelectric material as well as a mechanical device applying a compressive stress to said piezoelectric material element, said compressive stress being higher than 7 bars.

9. The parametric echosounder (1; 1') according to one of claims 7 or 8, wherein:
- each transducer (11, 12) is adapted to transmit acoustic waves in the underwater environment (3) at frequencies higher than 50 kilohertz,
- the receiver (20) is adapted to pick up and convert into electric form acoustic waves whose frequency is comprised between a reception bandwidth, the reception bandwidth being between 0 and 30 kilohertz, and wherein
- the driving and acquisition system (30; 30') is configured in such a way that the first and second frequencies (f1, f2) are each higher than 50 kilohertz, and in such a way that the difference between the first frequency (f1) and the second frequency (f2) is comprised in said reception bandwidth and lower than 30 kilohertz.

10. The parametric echosounder (1; 1') according to one of claims 7 to 9, wherein the driving and acquisition system (30; 30') is configured to vary the difference between said first frequency (f1) and said second frequency (f2), from one execution of step a) to the next.

11. The parametric echosounder (1; 1') according to one of claims 7 to 10, wherein the driving and acquisition system (30; 30') is moreover configured to:
after each execution of step a), acquire an additional echo signal, of frequency equal to said first frequency (f1) or to said second frequency (f2), picked up by one at least of said transducers (11, 12) in response to the transmission made at step a), and to
- determine an image (IM') representative of a portion of the underwater environment (3) on the basis of said additional echo signals.

12. The parametric echosounder (1; 1') according to one of claims 7 to 11, wherein the driving and acquisition system (30; 30') is moreover configured to, at step a), drive said transducers (11, 12) in such a way that an incidence angle, formed between said superposition axis (z_{S}) and an axis (z4) perpendicular to the underwater environment bottom (4), is greater than a limit incidence angle.

13. A method for characterizing a portion of the sub-bottom (40) of an underwater environment (3), implemented by means of a parametric echosounder (1; 1') according to any one of claims 1 to 11,
the method comprising the following steps, executed by the driving and acquisition system (30; 30'):
a) driving said transducers (11, 12) so that they transmit in an underwater environment (3) a first acoustic wave having a first frequency (f1) and a second acoustic wave having a second frequency (f2), the first wave and the second wave superposing each other along a superposition axis (z_{S}) directed towards a point (P1, P2, P3) of the underwater environment bottom (4), each transducer (11, 12) being driven by a transmit signal (s_{1,1}, s_{1,2}, s_{1,3}, s_{2,1}, s_{2,2}, s_{2,3}), the different transmit signals of the different transducers (11, 12) having predetermined delays (Δt_{1,1}, Δt_{1,2}, Δt_{1,3}, Δt_{2,1}, Δt_{2,2}, Δt_{2,3}) with respect to each other, and
b) acquiring an echo signal (s_{E}), of frequency equal to the difference between said first frequency (f1) and said second frequency (f2), picked up by said receiver (20) in response to the transmission made at step a),
all steps a) and b) being executed several times, by varying a part at least of said delays (Δt_{1,1}, Δt_{1,2}, Δt_{1,3}, Δt_{2,1}, Δt_{2,2}, Δt_{2,3}) from one execution of step a) to the next, in such a way as to modify the orientation of said superposition axis (z_{S}) from one execution of step a) to the next, the method further comprising the following step:
c) determining, based on the echo signals (s_{E}) acquired during the different executions of step b), a two-dimensional or three-dimensional image (IM) representative of the content of the sub-bottom (40) of the underwater environment (3) below each of said points (P1, P2, P3) of the bottom.
